(19) Europäisches Patentamt
European Patent Office
Office européen des brevets

(11) **EP 2 886 591 A1**

(12) **EUROPÄISCHE PATENTANMELDUNG**

(43) Veröffentlichungstag:
24.06.2015   Patentblatt 2015/26

(51) Int Cl.:
*C08J 9/00* (2006.01)    *C08J 9/14* (2006.01)

(21) Anmeldenummer: 13198303.3

(22) Anmeldetag: **19.12.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder:
• **Evonik Industries AG**
  **45128 Essen (DE)**
• **BASF SE**
  **67056 Ludwigshafen (DE)**

(72) Erfinder:
• **Klostermann, Michael**
  **45239 Essen (DE)**
• **Venzmer, Joachim**
  **45239 Essen (DE)**
• **Eilbracht, Christian**
  **44627 Herne (DE)**
• **Glos, Martin**
  **46325 Borken (DE)**
• **Schiller, Carsten**
  **40885 Ratingen (DE)**
• **Schütte, Markus**
  **49080 Osnabrück (DE)**
• **Elbing, Mark**
  **28215 Bremen (DE)**
• **Klassen, Johann**
  **32351 Stemwede-Oppendorf (DE)**
• **Fechner, Frank**
  **49324 Melle (DE)**
• **Wiegmann, Werner**
  **32369 Rahden-Wehe (DE)**

(54) **Zusammensetzung, geeignet zur Herstellung von Polyurethanschäumen, enthaltend mindestens ein Nukleierungsmittel**

(57)   Die vorliegende Erfindung betrifft ein Verfahren zur Herstellung von Polyurethan- oder Polyisocyanuratschaumstoffen umfassend die Umsetzung einer Zusammensetzung (Z1), enthaltend eine Zusammensetzung (ZP) mindestens enthaltend ein Polyol und einen Katalysator, der die Ausbildung einer Urethan-, Harnstoff- oder Isocyanurat-Bindung katalysiert, und ein Tensid TD, welches kein Siliziumatom und einen HLB-Wert kleiner 10 aufweist, wobei der Anteil der Summe der Tenside TD in der stabilisierten Zusammensetzung von 0,05 bis 10 Massenteile pro 100 Massenteile der Zusammensetzung (ZP) beträgt, mit mindestens einem Polyisocyanat, wobei die Umsetzung in Gegenwart eines Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und eines Treibmittels stattfindet, wobei das Nukleierungsmittel vom Treibmittel verschieden ist. Weiter betrifft die vorliegende Erfindung eine stabilisierte Zusammensetzung (ZS) sowie ein Kit zur Herstellung einer stabilisierten Zusammensetzung (ZS) für die Herstellung eines Polyurethan- oder Polyisocyanuratschaumstoffs, und Verfahren zur Herstellung von Polyurethan- oder Polyisocyanuratschaumstoffen durch Umsetzung einer erfindungsgemäßen stabilisierten Zusammensetzung bzw. einer nach einem erfindungsgemäßen Verfahren erhaltenen oder erhältlichen stabilisierten Zusammensetzung.

EP 2 886 591 A1

**Beschreibung**

Die vorliegende Erfindung betrifft ein Verfahren zur Herstellung von Polyurethan- oder Polyisocyanuratschaumstoffen umfassend die Umsetzung einer Zusammensetzung (Z1), enthaltend eine Zusammensetzung (ZP) mindestens enthaltend ein Polyol und einen Katalysator, der die Ausbildung einer Urethan-, Harnstoff- oder Isocyanurat-Bindung katalysiert, und ein Tensid TD, welches kein Siliziumatom und einen HLB-Wert kleiner 10 aufweist, wobei der Anteil der Summe der Tenside TD in der stabilisierten Zusammensetzung von 0,05 bis 10 Massenteile pro 100 Massenteile der Zusammensetzung (ZP) beträgt, mit mindestens einem Polyisocyanat, wobei die Umsetzung in Gegenwart eines Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und eines Treibmittels stattfindet, wobei das Nukleierungsmittel vom Treibmittel verschieden ist. Weiter betrifft die vorliegende Erfindung eine stabilisierte Zusammensetzung (ZS) sowie ein Kit zur Herstellung einer stabilisierten Zusammensetzung (ZS) für die Herstellung eines Polyurethan- oder Polyisocyanuratschaumstoffs, und Verfahren zur Herstellung von Polyurethan- oder Polyisocyanuratschaumstoffen durch Umsetzung einer erfindungsgemäßen stabilisierten Zusammensetzung bzw. einer nach einem erfindungsgemäßen Verfahren erhaltene oder erhältliche stabilisierte Zusammensetzung.

Die Herstellung von Polyurethan- bzw. Polyisocyanuratschaumstoffen durch Verschäumung schaumfähiger Reaktionsmischungen auf der Basis von Polyisocyanaten, Verbindungen mit reaktionsfähigen Wasserstoffatomen, Treibmitteln, Stabilisatoren und gegebenenfalls weiterer Zusatzstoffen wird heute im großtechnischen Maßstab betrieben. Ein wichtiges Einsatzgebiet dieser Schaumstoffe ist die Isolation, insbesondere die Wärmedämmung. Zur Herstellung von Isolierschaumstoffen ist es erforderlich, harte Schäume mit relativ niedrigem Raumgewicht von < 50 kg/m$^3$ und - als wesentlichem Kriterium - möglichst vielen kleinen geschlossenen Zellen (hohe Zelldichte) zu erzeugen.

Damit sich ein Schaum bilden kann, ist ein Treibgas erforderlich. Dies kann $CO_2$, das sich aus der Reaktion von Isocyanat mit Wasser bildet oder zusätzlich hinzugefügt wird, und/oder eine hinzugefügte leichtsiedende organische Flüssigkeit sein.

Das gebildete Gas muss dabei aus der flüssigen Phase austreten und Gasbläschen bilden, welche in der Steigphase des Schaums zu den späteren Schaumzellen anwachsen. Die Entstehung der anfangs mikroskopisch kleinen Gasbläschen in der flüssigen Phase wird als Nukleierung (= Keimbildung) bezeichnet und bedarf - analog zu anderen physikochemischen Nukleierungsvorgängen (z.B. bei Fällungsreaktionen) - einer Aktivierungsenergie. Zur Unterstützung der Blasenbildung bei der Nukleierung können mitverwendete Silikonschaumstabilisatoren wirken, indem sie die Oberflächenspannung absenken - und damit die zur Bildung der Blasenkeime notwendige Energie reduzieren - sowie die Dispersion von Luft in der reaktiven Mischung stabilisieren. Jedoch unterliegt der positive Einfluss von Zellstabilisatoren auf die Nukleierung und damit auf die Feinzelligkeit des Schaumes einem Sättigungsverhalten bezüglich der Einsatzkonzentration des Stabilisators, d.h. es gibt eine Grenze in der Feinzelligkeit, über die hinaus eine Zellverfeinerung durch weitere Erhöhung der Stabilisatorkonzentration nicht möglich ist.

Eine weitere Zellverfeinerung - und damit zusammenhängend eine Verbesserung der Isolationseigenschaften des Schaumstoffes - kann durch Zusatz sogenannter Nukleierungsmittel erfolgen. Dabei kann es sich um Feststoffe oder um Flüssigkeiten handeln, welche auf noch nicht abschließend geklärte Art die Zellnukleierung fördern.

Als eine technische Lösung wurde die heterogene Keimbildung an Feststoffen, insbesondere die Verwendung von Nanopartikeln oder nanostrukturierten Partikeln, vorgeschlagen (EP 1 683 831, EP 1 209 189, WO 2005/019328). Diese werden in der Regel in den Polyolkomponenten vorgemischt. Die Verwendung von Partikeln als Nukleierungsmittel in Polyurethanschäumen (PU-Schäumen) zur Herstellung von Isoliermaterialien hat sich in der Praxis aber aufgrund verschiedenster Probleme wie der Neigung zur Sedimentation oder der Abrasivität der Feststoffpartikel nicht durchsetzen können.

Effektiver und weniger problematisch sind flüssige Nukleierungsmittel auf Basis (per)fluorierter Kohlenwasserstoffe. Dabei kommt es zur Bildung von Emulsionen, insbesondere Mikroemulsionen. Je nach Größe der dispergierten Teilchen sind Emulsionen milchig trüb (Makroemulsion) bis klar (Mikroemulsion).

So offenbart beispielsweise DE 69212342 T2 die Verwendung von fluorierten Alkanen zur Bildung von Mikroemulsionen für Polyolblends zur Herstellung von speziellen sehr feinzelligen und offenzelligen Hartschaumstoffen, die als Kernmaterial zur Herstellung von Vakuumisolationspaneele eingesetzt werden. Feinzelligkeit wird durch die fluorierten Additive und Offenzelligkeit über cyclische Carbonate wie Glycerolcarbonat, Fixapret CNF erreicht. Als fluorierte Additive kommen beispielsweise Perfluorpentan oder Perfluor-2-butyl-tetrahydrofuran zum Einsatz. Ähnliche Systeme werden auch in US 5346928, DE 69413231 T2, EP 0662494 A1 und DE 69600838 T2 beschrieben.

In DE 69213166 T2 wird der Einsatz von fluorierten inerten organischen Flüssigkeiten wie Perfluorbutyltetrahydrofuran in Kombination mit fluorhaltigen oberflächenaktiven Mitteln wie FC 430 der Firma 3M zur Herstellung von Emulsionen bzw. Mikroemulsionen offenbart, wobei ein Isocyanat-Prepolymer verwendet wird. Das Prepolymer wird dabei durch Umsetzung von PMDI mit niedermolekularen Glykolen enthalten.

Auch DE 4121161 A1 offenbart die Herstellung von Polyurethan-Hartschaumstoffen unter Verwendung von Vinylperfluoralkanen wie z.B. Mischungen aus Vinylperfluor-n-butan und 1 H-Perfluorhexan, wobei die fluorierten Verbindungen in einer der beiden Komponenten wie z.B. im Polyol-Blend als Emulsion vorliegen. Dadurch werden Schaumstoffe mit feineren Zellen und niedrigerer Wärmeleitfähigkeit erhalten. Es werden milchige Emulsionen, jedoch keine Mikroemulsionen erhalten.

DE 3930824 A1 betrifft die Verwendung von Perfluoralkanen wie Perfluorpentan (Sdp. 28°C) als (Haupt-)Treibmittel, das emulgiert in der Polyolkomponente vorliegt. Eine Stabilisierung erfolgt dabei durch anorganische Emulgatoren wie Kieselgel-Teilchen mit Durchmesser von beispielsweise 5 $\mu$m oder organischen Emulgatoren wie Stärke (Amylum solubile). Es wird beschrieben, dass Treibmitteltröpfchen mit einem Durchmesser kleiner 20 $\mu$m erhalten werden können.

US 6420443 B1 offenbart die Verwendung von speziellen ethoxylierten Triglyceriden (OH-Zahl < 90 sowie EO-Gehalt > 40%) wie z.B. ethoxyliertes Rizinusöl zur Herstellung klassischer Emulsionen zur Erhöhung der Löslichkeit von Kohlenwasserstoffen in Polyol-Blends. Im dort zitierten Stand der Technik werden weitere klassische Kompatibilitätsvermittler erwähnt wie z.B. Fettsäuren, Alkylaromaten, Monoole sowie deren alkoxylierte Varianten. Des weiteren werden Ester der Fettsäuren, Fettöle oder Phosphorsäure genannt.

Trotz der erwiesenen Wirksamkeit (per)fluorierter Kohlenwasserstoffe als Nukleierungsmittel haben auch diese Substanzen keine breite Verwendung bei der Herstellung von PU-Schäumen gefunden, was an einer schlechten Lagerstabilität der verwendeten Mischungen liegen könnte, da insbesondere beim Einsatz von vorformulierten Polyurethansystemen bei der Herstellung von Polyurethanen, beispielsweise von Isolationsmaterialien für Kühlmöbel (Kühl- und Gefrierschränke bzw. -truhen) Wert auf die Separationsstabilität der Polyurethansysteme bzw. der eingesetzten Polyolmischungen gelegt wird.

Zur Lösungsvermittlung zwischen Polyol-Systemen und Treibmitteln wurde die Verwendung von verschiedenen Tensiden vorgeschlagen.

WO 2007/094780 beschreibt Polyolmischungen enthaltend Kohlenwasserstoffe als Treibmittel, wobei den Mischungen zur Verbesserung der Löslichkeit des Treibmittels in der Mischung ein Ethoxylat-Propoxylat-Tensid zugegeben wird.

US 6472446 beschreibt Polyolmischungen enthaltend Kohlenwasserstoffe als Treibmittel, wobei den Mischungen zur Verbesserung der Löslichkeit des Treibmittels in der Mischung ein Butanol gestartetes Propylenoxidpolyether-Tensid zugegeben wird.

WO 98/42764 beschreibt ebenfalls Polyolmischungen enthaltend Kohlenwasserstoffe als Treibmittel, wobei den Mischungen zur Verbesserung der Löslichkeit des Treibmittels in der Mischung ein $C_{12}$-$C_{15}$ gestarteter Polyether als Tensid zugegeben wird.

WO 96/12759 beschreibt ebenfalls Polyolmischungen enthaltend Kohlenwasserstoffe als Treibmittel, wobei den Mischungen zur Verbesserung der Löslichkeit des Treibmittels in der Mischung ein Tensid zugegeben wird, welches einen Alkylrest mit mindestens 5 Kohlenstoffatomen aufweist.

EP 0767199 A1 beschreibt die Verwendung von Diethanolamiden von Fettsäuren natürlicher Herkunft als Tensid zur Herstellung von Polyolmischungen, die Kohlenwasserstoffe als Treibmittel aufweisen.

In EP 1520873 A2 werden Mischungen von Halogenkohlenwasserstoff-Treibmitteln und Treibmittel-Verstärker, die ein Molekulargewicht von kleiner 500 g/mol aufweisen, beschrieben, wobei die Treibmittel-Verstärker Polyether oder Monoalkohole, wie z. B Ethanol, Propanol, Butanol, Hexanol, Nonanol oder Decanol, sein können. Das Verhältnis von Treibmittel zu Treibmittel-Verstärker wird mit 60 bis 95 Massen-% zu 40 bis 5 Massen-% angegeben.

WO 2013/026813 beschreibt Mikroemulsionen von Polyolen und unpolaren organischen Verbindungen, welche durch Einsatz mindestens einer halogenfreien Verbindung, die mindestens eine amphiphile Verbindung ausgewählt aus nichtionischen Tensiden, Polymeren und Mischungen davon und mindestens eine von dieser Verbindung verschiedenen Verbindung enthält, erhalten wird und deren Verwendung bei der Herstellung von Polyurethanen. Die eingesetzten unpolaren Verbindungen können auch fluorierte Verbindungen enthalten.

Da sich die Lösungseigenschaften von perfluorierten bzw. hoch-fluorierten Kohlenwasserstoffen fundamental von denen nicht bzw. wenig fluorierter Kohlenwasserstoffe unterscheiden, ist eine Übertragbarkeit der für Kohlenwasserstoff-basierte Treibmittel vorgeschlagenen Additive auf die vorliegende Fragestellung nicht möglich.

Ausgehend vom Stand der Technik lag eine Aufgabe der vorliegenden Erfindung deshalb in der Bereitstellung eines Verfahrens zur Herstellung von Polyurethanen bzw. Polyisocyanuraten, wobei keine Phasenseparation der im Verfahren umgesetzten Mischungen im Laufe des Verfahrens auftritt bzw. in der Bereitstellung einer Zusammensetzung enthaltend Polyole und ein Nukleierungsmittel sowie Treibmittel, deren Handhabung und Verarbeitung mit bestehender Anlagentechnik nach den üblichen Prozessen problemlos möglich ist, und die somit für die Herstellung von Polyurethanschäumen in bestehenden Anlagen eingesetzt werden kann, bzw. Verfahren zur Stabilisierung der entsprechenden Polyolkomponenten.

Erfindungsgemäß wird diese Aufgabe gelöst durch ein Verfahren zur Herstellung von Polyurethan- oder Polyisocyanuratschaumstoffen umfassend die Umsetzung

    (a) einer Zusammensetzung (Z1), enthaltend

(i) eine Zusammensetzung (ZP) mindestens enthaltend ein Polyol und einen Katalysator, der die Ausbildung einer Urethan-, Harnstoff- oder Isocyanurat-Bindung katalysiert, und

(ii) ein Tensid TD, welches kein Siliziumatom und einen HLB-Wert kleiner 10 aufweist, enthält, wobei der Anteil der Summe der Tenside TD in der Zusammensetzung von 0,05 bis 10 Massenteile pro 100 Massenteile der Zusammensetzung (ZP) beträgt,

(b) mit mindestens einem Polyisocyanat,

wobei die Umsetzung in Gegenwart eines Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und eines Treibmittels stattfindet, wobei das Nukleierungsmittel vom Treibmittel verschieden ist.

Im erfindungsgemäßen Verfahren zur Herstellung von Polyurethan- oder Polyisocyanuratschaumstoffen wird eine Zusammensetzung (Z1), enthaltend eine Zusammensetzung (ZP) mindestens enthaltend ein Polyol und einen Katalysator, der die Ausbildung einer Urethan-, Harnstoff- oder Isocyanurat-Bindung katalysiert, und ein Tensid TD, welches kein Siliziumatom und einen HLB-Wert kleiner 10 aufweist, wobei der Anteil der Summe der Tenside TD in der Zusammensetzung von 0,05 bis 10 Massenteile pro 100 Massenteile der Zusammensetzung (ZP) beträgt, mit einem Polyisocyanat umgesetzt. Die Umsetzung erfolgt in Gegenwart eines Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und eines Treibmittels stattfindet, wobei das Nukleierungsmittel vom Treibmittel verschieden ist.

Es wurde überraschend gefunden, dass separationsstabile und somit phasenstabile Zusammensetzungen aus Polyol(en), Treibmittel und Nukleierungsmittel, sowie gegebenenfalls Additiven, bereitgestellt werden können, wenn der Mischung zusätzlich ein Tensid zugesetzt wird, welches einen HLB-Wert kleiner 10, bevorzugt kleiner 7, besonders bevorzugt kleiner 6 aufweist. Somit tritt im Verlauf des erfindungsgemäßen Verfahrens in den einzelnen Reaktionsschritten keine Phasenseparation der jeweiligen Mischungen auf, die zu Störungen beim Verfahren führen könnte.

Erfindungsgemäß werden mindestens ein Nukleierungsmittel und mindestens ein Treibmittel eingesetzt, wobei das Nukleierungsmittel vom Treibmittel verschieden ist, d.h. es werden zwei verschiedene Verbindungen eingesetzt. Dabei ist es möglich, dass das eingesetzte Nukleierungsmittel neben der Wirkung als Nukleierungsmittel auch in gewissem Maß als Treibmittel wirkt. Auch das eingesetzte Treibmittel kann neben der Wirkung als Treibmittel in gewissem Maß als Nukleierungsmittel wirken.

Erfindungsgemäß ist es möglich, dass das Treibmittel oder das Nukleierungsmittel oder das Treibmittel und das Nukleierungsmittel der Zusammensetzung (Z1) vor der Umsetzung mit dem Polyisocyanat zugesetzt werden. Es hat sich als besonders vorteilhaft erwiesen, wenn das Treibmittel und das Nukleierungsmittel gemischt werden, und die erhaltene Mischung dann zu der Zusammensetzung (Z1) zugegeben wird.

Demgemäß betrifft die vorliegende Erfindung gemäß einer weiteren Ausführungsform ein Verfahren zur Herstellung von Polyurethan- oder Polyisocyanuratschaumstoffen wie zuvor beschrieben, wobei das Treibmittel der Zusammensetzung (Z1) vor der Umsetzung mit dem mindestens einen Polyisocyanat zugesetzt wird.

Gemäß einer weiteren Ausführungsform betrifft die vorliegende Erfindung ein Verfahren zur Herstellung von Polyurethan- oder Polyisocyanuratschaumstoffen wie zuvor beschrieben, wobei das Nukleierungsmittel und das Treibmittel unter Erhalt einer Zusammensetzung (Z2) gemischt werden und die Zusammensetzung (Z2) der Zusammensetzung (Z1) vor der Umsetzung mit dem mindestens einen Polyisocyanat zugesetzt wird.

Weiter betrifft die vorliegende Erfindung ein Kit zur Herstellung einer stabilisierten Zusammensetzung (ZS) für die Herstellung eines Polyurethan- oder Polyisocyanuratschaumstoffs, bestehend aus

(I) einer Zusammensetzung (Z1), mindestens enthaltend
eine Zusammensetzung (ZP) enthaltend mindestens ein Polyol und mindestens einen Katalysator, der die Ausbildung einer Urethan-, Harnstoff- oder Isocyanurat-Bindung katalysiert, und
mindestens ein Tensid TD, welches kein Siliziumatom und einen HLB-Wert kleiner 10 aufweist, enthält, wobei der Anteil der Summe der Tenside TD in der Zusammensetzung von 0,05 bis 10 Massenteile pro 100 Massenteile der Zusammensetzung (ZP) beträgt, und

(II) einer Zusammensetzung (Z2), mindestens enthaltend
ein Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und
ein Treibmittel, wobei das Nukleierungsmittel vom Treibmittel verschieden ist.

Das erfindungsgemäße Kit besteht dementsprechend aus einer Zusammensetzung (Z1) und einer Zusammensetzung (Z2). Die Zusammensetzung (Z1) und die Zusammensetzung (Z2) können gemischt werden, wobei eine stabilisierte Zusammensetzung (ZS) erhalten wird, die zur Herstellung eines Polyurethan- oder Polyisocyanuratschaumstoffs geeignet ist.

Demgemäß betrifft die vorliegende Erfindung auch eine stabilisierte Zusammensetzung (ZS), mindestens enthaltend

(a) mindestens eine Zusammensetzung (ZP) mindestens enthaltend mindestens ein Polyol und mindestens einen Katalysator, der die Ausbildung einer Urethan-, Harnstoff- oder Isocyanurat-Bindung katalysiert,
(b) mindestens ein Tensid TD, welches kein Siliziumatom und einen HLB-Wert kleiner 10 aufweist, enthält, wobei der Anteil der Summe der Tenside TD in der Zusammensetzung von 0,05 bis 10 Massenteile pro 100 Massenteile der Zusammensetzung (ZP) beträgt,
(c) mindestens ein Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen,
(d) mindestens ein Treibmittel, wobei das Treibmittel vom Nukleierungsmittel verschieden ist,

wobei die Zusammensetzung (ZS) eine phasenstabile Flüssigkeit ist, dadurch gekennzeichnet, dass die Zusammensetzung (ZS) mit bloßem Auge betrachtet bei einer Umgebungstemperatur von 20°C nicht aus mehreren Phasen besteht.

Die erfindungsgemäße stabilisierte Zusammensetzung enthält demnach mindestens eine Zusammensetzung (ZP), mindestens ein Tensid TD, mindestens ein Nukleierungsmittel und mindestens ein Treibmittel, wobei die Zusammensetzung (ZP) mindestens ein Polyol und mindestens einen Katalysator wie zuvor definiert enthält. Dabei ist die Zusammensetzung (ZS) eine phasenstabile Flüssigkeit, die mit bloßem Auge betrachtet bei einer Umgebungstemperatur von 20°C nicht aus mehreren Phasen besteht. Bevorzugt ist die Zusammensetzung für mindestens 48 Stunden phasenstabil, weiter bevorzugt für mindestens 72 Stunden und besonders bevorzugt für mindestens 120 Stunden.

Demgemäß zeigen die erfindungsgemäßen stabilisierten Zusammensetzungen (ZS) vorzugsweise für mindestens 48 Stunden, weiter bevorzugt für mindestens 72 Stunden und besonders bevorzugt für mindestens 120 Stunden keine makroskopisch erkennbare Grenzfläche und die Zusammensetzung ist vorzugsweise für mindestens 48 Stunden, weiter bevorzugt für mindestens 72 Stunden und besonders bevorzugt für mindestens 120 Stunden thermodynamisch homogen.

Die erfindungsgemäßen stabilisierten Zusammensetzungen (ZS) sind phasenstabil und damit lagerstabil. Dementsprechend können sie zeitlich vor der Weiterverarbeitung, beispielsweise vor der Umsetzung mit Isocyanaten, hergestellt werden und gelagert werden. Es ist jedoch ebenfalls möglich, dass die Zusammensetzungen (ZS) in dem erfindungsgemäßen Verfahren kurz vor einer weiteren Umsetzung, beispielsweise mit einem Isocyanat, hergestellt werden. Es ist somit auch möglich, dass das erfindungsgemäße Verfahren zur Herstellung einer stabilisierten Zusammensetzung (ZS) über einen Mischkopf in einem Verfahren erfolgt, wobei eine weitere Umsetzung der stabilisierten Zusammensetzung direkt nach der Herstellung erfolgt.

Üblicher Weise wird der HLB-Wert dazu verwendet, Emulgatoren für die Herstellung von Öl-Wasser-Emulsionen auszuwählen. Es war daher nicht absehbar, dass sich ein solcher Wert auch für die Auswahl von Tensiden für Polyolsysteme eignet. Der HLB-Wert eines Tensids lässt sich hierbei gemäß der Inkrementen-Methode nach Griffin (W. C. Griffin, J. Cos. Cosmet. Chem., 1950, 311:5, 249) und McGowan (J. C. McGowan, Tenside Surfactants Detergents, 1990, 27, 229) berechnen. Gemäß dieser Methode lässt sich der HLB-Wert eines Moleküls aus einzelnen Inkrementen seiner molekularen Bausteine gemäß Gleichung 1 zusammensetzen.

$$HLB = 7 + \sum H_h + \sum H_l \qquad\qquad (Gl.\ 1)$$

$H_h$ und $H_l$ sind hierbei die HLB-Gruppenzahlen der einzelnen hydrophilen bzw. lipophilen Molekülbausteine. Typische Werte für $H_h$ und $H_l$ sind in Tabelle 1 aufgelistet.

Tab. 1: HLB-Gruppenzahlen verschiedener Molekülbausteine (siehe auch Tabelle 3 in R. Sowada und J. C. McGowan, *Tenside Surfactants Detergents,* 1992, *29*, 109)

| | Molekülbaustein | HLB-Gruppenzahl |
|---|---|---|
| $H_h$ | -O- (Ether) | 1,3 |
| | -OH (frei) | 1,12 |
| | -COOH (frei) | 2,09 |

(fortgesetzt)

|  | Molekülbaustein | HLB-Gruppenzahl |
|---|---|---|
|  | -COO- (Ester) | 2,28 |
|  | -CONH-R (Amid) | 2,136 |
|  | -CON-$R_2$ (Amid) | 2,319 |
|  | -$NH_2$ (frei) | 8,59 |
|  | -($CH_2CH_2O$)- | 0,353 |
| $H_l$ | -$CH_3$ | -0,658 |
|  | -$CH_2$-R | -0,457 |
|  | -CH-$R_2$ | -0,295 |
|  | -CH= | -0,402 |

Das erfindungsgemäße Verfahren bzw. die erfindungsgemäßen stabilisierten Zusammensetzungen (ZS) haben den Vorteil, dass größere Mengen an Nukleierungsmitteln, insbesondere solchen, die perfluorierte Kohlenwasserstoffreste aufweisen und die ggf. Sauerstoffatome aufweisen können, eingebracht werden können, ohne dass die erhaltenen Zusammensetzungen, auch nach einer Lagerung von beispielsweise 72 Stunden, eine mit bloßem Auge erkennbare Phasenseparation zeigen.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 20 °C und einem Druck von 101.325 Pa durchgeführt.

Unter Polyurethanschaum (PU-Schaum) wird im Rahmen der vorliegenden Erfindung Schaum verstanden, der als Reaktionsprodukt basierend auf Isocyanaten und Verbindungen mit Isocyanat-reaktiven Gruppen, beispielsweise Polyolen, erhalten wird. Es können hierbei neben dem Namen gebenden Polyurethan auch weitere funktionelle Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden. Bevorzugte Polyurethanschäume sind Polyurethanhartschäume.

Im erfindungsgemäßen Verfahren wird mindestens ein Tensid TD eingesetzt, wobei der Anteil der Summe der Tenside TD im Bereich von 0,05 bis 10 Massenteile in 100 Massenteile der Zusammensetzung (ZP) liegt.

Der Anteil der Summe der Tenside TD liegt vorzugsweise im Bereich von 0,1 bis 8 und bevorzugt im Bereich von 0,5 bis 7 Massenteile an Tensiden TD pro 100 Massenteile der Zusammensetzung (ZP).

Das Tensid TD ist vorzugsweise mindestens eine Verbindung der Formel (I)

$$R-[C(O)]_x-Y \qquad (I)$$

mit C(O) einer Carbonylgruppe, x = 0 oder 1, R ein linearer, verzweigter oder cyclischer, gesättigter oder ungesättigter, vorzugsweise gesättigter Kohlenwasserstoffrest, mit mindestens 4, vorzugsweise von 8 bis 30, bevorzugt von 9 bis 20 und besonders bevorzugt 9 bis 18 Kohlenstoffatomen, und Y = O-$R^1$ oder $NR^1R^2$ oder O-$CH_2$-CH($OR^3$)-$CH_2$OH, jeweils mit $R^1$ und $R^2$ gleiche oder verschiedene Reste $(C_nH_{2n}O)_m$-H, wobei n = 2 bis 4, vorzugsweise n = 2 oder 3, besonders bevorzugt n = 2 ist, sowie m = 0 - 15, bevorzugt m = 0 - 10, besonders bevorzugt m = 0 oder 1 - 6, und $R^1$ und $R^2$ untereinander gleich oder verschieden sein dürfen, und mit $R^3$ = H oder R' oder C(O)R', wobei R' ein Kohlenwasserstoffrest analog zur Definition von R ist und gleich oder verschieden zum Rest R sein kann.

Gemäß einer weiteren Ausführungsform betrifft die vorliegende Erfindung demgemäß ein Verfahren zur Herstellung von Polyurethan- oder Polyisocyanuratschaumstoffen wie zuvor beschrieben, dadurch gekennzeichnet, dass das Tensid TD mindestens eine Verbindung der Formel (I) ist,

$$R-[C(O)]_x-Y \qquad (I)$$

mit C(O) einer Carbonylgruppe, x = 0 oder 1, R ein linearer, verzweigter oder cyclischer, gesättigter oder ungesättigter Kohlenwasserstoffrest, mit mindestens 4, vorzugsweise von 8 bis 30, bevorzugt von 9 bis 20 und besonders bevorzugt 9 bis 18 Kohlenstoffatomen, und Y = O-R$^1$ oder NR$^1$R$^2$ oder O-CH$_2$-CH(OR$^3$)-CH$_2$OH, jeweils mit R$^1$ und R$^2$ gleiche oder verschiedene Reste (C$_n$H$_{2n}$O)$_m$-H, wobei n = 2 bis 4, vorzugsweise n = 2 bis 3, besonders bevorzugt n = 2 ist, sowie m = 0 - 15, bevorzugt m = 0 - 10, besonders bevorzugt m = 0 oder 1 - 6, und mit R$^3$ = H oder R' oder C(O)R', wobei R' ein Kohlenwasserstoffrest wie für R definiert ist und gleich oder verschieden zum Rest R sein kann.

Besonders bevorzugte Tenside TD sind solche, die mindestens einen Kohlenwasserstoffrest mit mindestens 4 Kohlenstoffatomen, bevorzugt mit mindestens 8 Kohlenstoffatomen und besonders bevorzugt mit 9 bis 18 Kohlenstoffatomen aufweisen, und die einen HLB-Wert kleiner 10, bevorzugt kleiner 7, besonders bevorzugt kleiner 6 aufweisen.

Gemäß einer weiteren Ausführungsform betrifft die vorliegende Erfindung demgemäß ein Verfahren zur Herstellung von Polyurethan- oder Polyisocyanuratschaumstoffen wie zuvor beschrieben, dadurch gekennzeichnet, dass das Tensid TD mindestens einen Kohlenwasserstoffrest mit mindestens 4 Kohlenstoffatomen, und einen HLB-Wert kleiner 10 aufweist.

Gemäß einer weiteren Ausführungsform betrifft die vorliegende Erfindung ein Verfahren zur Herstellung von Polyurethan- oder Polyisocyanuratschaumstoffen wie zuvor beschrieben, dadurch gekennzeichnet, dass das Tensid TD einen HLB-Wert von kleiner 6 aufweist.

Wird ein Tensid TD der Formel (I) eingesetzt, bei dem x = 0 und Y = O-R$^1$ ist, so ist das Tensid TD vorzugsweise ausgewählt aus der Gruppe bestehend aus Alkohol-Alkoxylaten auf der Basis von Oktanol, Nonanol, Isononanol, Caprylalkohol, Decanol, Laurylalkohol, Tridecanol, Isotridecanol, Myristylalkohol, Cetylalkohol, Stearylalkohol oder Isostearylalkohol, besonders bevorzugt Ethoxylate dieser Substanzen. Die Herstellung entsprechender Fettalkoholalkoxylate kann wie im Stand der Technik beschrieben erfolgen.

Wird ein Tensid TD der Formel (I) eingesetzt, bei dem x = 0 und Y = O-R$^1$, mit m = 0, ist, so ist das Tensid TD vorzugsweise ausgewählt aus der Gruppe bestehend aus Oktanol, Nonanol, insbesondere Isononanol, Caprylalkohol, Laurylalkohol, Tridecanol, Isotridecanol, Myristylalkohol, Cetylalkohol, Stearylalkohol, Isostearylalkohol, Tridecanol, Decanol, Dodecanol oder ein Gemisch diese Substanzen, bevorzugt Iso-Tridecanol und/oder, vorzugsweise oder, Iso-Nonanol (3,5,5-Trimethylnonan-1-ol).

Wird ein Tensid TD der Formel (I) eingesetzt, bei dem x = 0 und Y = NR$^1$R$^2$ mit m = 0 ist, so ist das Tensid TD bevorzugt ausgewählt aus der Gruppe bestehend aus Fettaminen, bevorzugt Oktylamin, Nonylamin, Isononylamin, Caprylamin, Laurylamin, Tridecylamin, Isotridecylamin, Myristylamin, Cetylamin, Stearylamin oder Isostearylamin. Für m und n ungleich 0 sind die Tenside TD besonders bevorzugt Ethoxylate dieser Amine.

Wird ein Tensid TD der Formel (I) eingesetzt, bei dem x = 0 und Y = O-CH$_2$-CH(OR$^3$)-CH$_2$OH ist, so sind hierbei Glycerin-mono- und Diether von gesättigten oder ungesättigten Alkoholen, wie z.B. Oktanol, Nonanol, Isononanol, Caprylalkohol, Laurylalkohol, Tridecanol, Isotridecanol, Myristylalkohol, Cetylalkohol, Stearylalkohol oder Isostearylalkohol besonders bevorzugt.

Gemäß einer weiteren Ausführungsform betrifft die vorliegende Erfindung demgemäß ein Verfahren zur Herstellung von Polyurethan- oder Polyisocyanuratschaumstoffen wie zuvor beschrieben, dadurch gekennzeichnet, dass das Tensid TD Iso-Tridecanol oder Iso-Nonanol ist.

Wird ein Tensid TD der Formel (I) eingesetzt, bei dem x = 1 und Y = O-R$^1$ ist, so ist das Tensid TD vorzugsweise ausgewählt aus der Gruppe bestehend aus Alkoxylaten, besonders bevorzugt Ethoxylate, von gesättigten oder ungesättigten Fettsäuren mit bis zu 30 C-Atomen wie z. B. Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z14Z)-5,8,11,14- Eicosatetraensäure), Erucasäure ((Z)-13-Docosensäure), Nervonsäure ((Z)-15-Tetracosensäure), Rizinolsäure, Hydroxystearinsäure und Undecenylsäure, sowie deren Mischungen.

Wird ein Tensid TD der Formel (I) eingesetzt, bei dem x = 1 und Y = O-CH$_2$-CH(OR$^3$)-CH$_2$OH ist, so ist das Tensid TD vorzugsweise ausgewählt aus der Gruppe bestehend aus Mono- oder Digylceriden, insbesondere bevorzugt sind hierbei Mono- und Digylceride von geradkettigen gesättigten oder ungesättigten Fettsäuren mit bis zu 30 C-Atomen wie z. B. Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14- Eicosatetraensäure), Erucasäure ((Z)-13-Docosensäure), Nervonsäure ((Z)-15-Tetracosensäure), Rizinolsäure, Hydroxystearinsäure und Undecenylsäure, sowie deren Mischungen.

Wird ein Tensid TD der Formel (I) mit x = 1 eingesetzt, bei dem Y = $NR^1R^2$ ist, so ist das Tensid TD vorzugsweise ausgewählt aus der Gruppe bestehend aus Fettsäureamiden eines Mono- oder Dialkanolamins, besonders bevorzugt des Diisopropanolamins oder des Diethanolamins. Die Herstellung von Säureamiden kann nach den im Stand der Technik bekannten Verfahren, so wie z. B. in DE 1802500; DE 1802503, DE 1745443, DE 1745459 oder US 3578612 beschrieben, erfolgen. Es können hier als Rohstoffe z. B. die entsprechenden Carbonsäuren verwendet werden und die Amidbildung unter Wasserabspaltung stattfinden. Ebenso können Carbonsäureester, wie beispielsweise Methylester eingesetzt werden, wobei dann Methanol abgespalten wird. Besonders bevorzugt ist die Verwendung von Glyceriden aus den natürlich vorkommenden Fetten und Ölen, wobei das bei der Amidierung entstehende Glycerin im Reaktionsgemisch verbleiben kann. Ebenso können beispielweise bei der Umsetzung von Triglyceriden mit Aminen noch Di- und Mono-Glyceride im Reaktionsgemisch vorliegen, wenn die Reaktionsbedingungen entsprechend gewählt wurden. Bei Verwendung von Carbonsäureestern werden gegebenenfalls entsprechende Katalysatoren wie z.B. Alkoholate eingesetzt, die eine Amidierung bei relativ milden Bedingungen, im Vergleich zur oben genannten Wasserabspaltung, ermöglichen. Bei der Verwendung von höher-funktionellen Aminen (Diethylentriamin (DE-TA), 2-(2-Aminoethylamino)ethanol (AEEA), Tris(hydroxymethyl)-aminomethan (TRIS)) kann es bei der Herstellung der Amide auch zur Bildung von entsprechenden cyclischen Amiden kommen wie Imidazolinen oder Oxazolinen.

Falls bei der Amidierung ein basischer Katalysator verwendet wird kann es vorteilhaft sein, mit einer entsprechenden Menge an organischer oder anorganischer Säure anschließend eine Neutralisation durchzuführen. Geeignete Verbindungen sind dem Fachmann bekannt.

Besonders bevorzugt ist die Neutralisation, der durch basische Katalyse hergestellten Amide, mit organischen Anhydriden von Dicarbonsäuren, da diese mit den zur Verfügung stehenden OH- oder NH-Funktionen reagieren können und dadurch angebunden werden, und somit später im fertigen Schaum nicht in Form von freien Carbonsäuren als Emission anfallen können. Außerdem werden z. B. bei der Verwendung von Alkali-Alkoholaten bei der Neutralisation dann entsprechende Ester gebildet, so dass die freien Alkohole nicht aus dem System entweichen können.

Bevorzugte organische Anhydride sind cyclische Anhydride wie zum Beispiel Bernsteinsäureanhydrid, Maleinsäureanhydrid, Alkylbernsteinsäureanhydride, wie Dodecylbernsteinsäureanhydrid oder Polyisobutylenbernsteinsäureanhydrid, ebenso geeignet sind Addukte von Maleinsäureanhydrid an entsprechende Polyolefine wie beispielsweise Polybutadiene, Copolymere aus Maleinsäureanhydrid und Olefinen, Stryrol-Maleinsäureanhydrid-Copolymere, Vinylether-Maleinsäureanhydrid-Copolymere, sowie generell Copolymere die Maleinsäureanhydrid als Monomer enthalten, Phthalsäureanhydrid, Benzophenontetracarboxyldianhydrid, Pyromellitsäuredianhydrid, Itaconsäure-Anhydrid oder ähnliche Strukturen. Beispiele für kommerziell erhältliche Anhydride dieser Art sind z. B. die Poylvest®-Typen von Evonik Degussa GmbH oder Ricon® MA-Typen von Sartomer.

Sämtliche Reaktionsschritte können in Substanz oder auch in geeigneten Lösungsmitteln durchgeführt werden. Bei Verwendung von Lösungsmitteln kann der Gehalt an "Aktivsubstanz" im Bereich von 10 bis 99 Massen-% bevorzugt 20 bis 98 Massen-%, besonders bevorzugt 30 bis 97 Massen-% bezogen auf die Gesamtzusammensetzung liegen.

Als Carbonsäuren können zur Herstellung der Tenside der Formel (I) mit x = 1 z. B. Monocarbonsäuren, Dicarbonsäuren, Tricarbonsäuren, Tetracarbonsäuren auf Basis von aliphatischen oder aromatischen Kohlenwasserstoffen oder deren Derivate eingesetzt werden.

Beispiele für Alkylreste der Monocarbonsäuren sind z.B.: Methyl, Ethyl, Propyl, Butyl, Pentyl, Hexyl, Heptyl, Octyl, Nonyl oder Decyl, und dergleichen, bevorzugt sind hier 2-Ethylhexansäure, Nonansäure, Isononansäure.

Beispiele für Alkenylgruppen sind z.B.: Ethenyl, Propenyl, Butenyl, Pentenyl, Hexenyl, Heptenyl, Octenyl, Nonenyl, Decenyl, und dergleichen.

Beispiele für aromatische Säuren sind z. B.: Aryl und Alkylaryl (Alkylaryl ist festgelegt als eine Aryl-substituierte Alkyl- oder Arylalkygruppe), wie beispielsweise: Phenyl, Alkyl-substituiertes Phenyl, Naphthyl, Alkyl-substitutiertes Naphthyl Tolyl, Benzyl, Dimethylphenyl, Trimethylphenyl, Phenylethyl, Phenylpropyl, Phenylbutyl, Propyl-2-phenylethyl, Salicyl und dergleichen.

Aromatische Dicarbonsäuren können z. B. sein: Isophthalsäure, Terephthalsäure oder Phthalsäure. Als aliphatische Dicarbonsäuren können beispielsweise verwendet werden: Bernsteinsäure, Malonsäure, Adipinsäure, Dodecandicarbonsäure, Maleinsäure, Fumarsäure, Itaconsäure, Citraconsäure, Mesaconsäure, Weinsäure, Äpfelsäure, Malonsäure, Glutarsäure, Adipinsäure, Pimelinsäure, Korksäure, Azelainsäure, Sebacinsäure, Zitronensäure.

Als höher funktionelle Säuren können beispielsweise eingesetzt werden: Trimesinsäure, Pyromellitsäure, Benzophenontetracarbonsäure

Bevorzugte Säuren sind geradkettige gesättigte oder ungesättigte Fettsäuren mit bis zu 40 C-Atomen wie z. B. Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14- Eicosatetraensäure), Erucasäure ((Z)-13-Docosensäure), Nervonsäure ((Z)-15-Tetracosensäure), Rizinolsäure, Hydroxystearinsäure und Undecenylsäure, sowie deren Mischungen, wie z.B. Rapsölsäure, Soyafettsäure, Sonnenblumenfettsäure, Erdnussfettsäure und Tallölfettsäure. Weiterhin können Dimer- und Oligomerfettsäuren, wie sie bei der Oligomerisierung ungesättigter Fettsäuren entstehen, verwendet werden.

Quellen für geeignete Fettsäuren oder Fettsäureester besonders Glyceride können pflanzliche oder tierische Fett, Öle oder Wachse sein. Beispielsweise können verwendet werden: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl, Erdnussöl, Lupinöl, Rapsöl, Senföl, Rizinusöl, Jatropaöl, Walnussöl, Jojobaöl, Lecithin z.B. auf Basis von Soja, Raps, oder Sonnenblumen, Knochenöl, Klauenöl, Borretschöl, Lanolin, Emuöl, Hirschtalg, Murmeltieröl, Nerzöl, Borretschöl, Distelöl, Hanföl, Kürbisöl, Nachtkerzenöl, Tallöl, sowie Carnaubawachs, Bienenwachs, Candelillawachs, Ouricuriwachs, Zuckerrohrwachs, Retamowachs, Carandaywachs, Raffiawachs, Espartowachs, Alfalfawachs, Bambuswachs, Hempwachs, Douglastannenwachs, Korkwachs, Sisalwachs, Flachswachs, Baumwollwachs, Dammarwachs, Teewachs, Kaffeewachs, Reiswachs, Oleanderwachs, Bienenwachs oder Wollwachs.

Zur Herstellung der Verbindungen der Formel (I) mit x = 1 geeignete, mindestens eine OH-Funktion aufweisende Hydroxylamine sind zum Beispiel: Diethanolamin, Monoethanolamin, Diisopropanolamin, Isopropanolamin, Digylkolamin (2-(2-Aminoethoxy)ethanol), 3-Amino-1-propanol und Polyetheramine wie Polyetheramin D 2000 (BASF), Polyetheramin D 230 (BASF), Polyetheramin T 403 (BASF), Polyetheramin T 5000 (BASF) oder auch entsprechende Jeffamin®-Typen von Huntsman.

Erfindungsgemäß geeignete Verbindungen der Formel (I) mit x = 1 können auch kommerziell erhältliche Amide mit OH- oder NH-Funktionen sein, wie beispielsweise von Evonik Goldschmidt: Rewomid® DC 212 S, Rewomid® DO 280 SE, Rewocid® DU 185 SE, Rewolub® KSM, REWOMID® C 212, REWOMID® IPP 240, REWOMID® SPA, Rewopon® IM AO, Rewopon® IM AN oder Rewopon® IM R 40, sowie DREWPLAST® 154, NINOL® 1301, NINOL® 40-CO, NINOL® 1281, NINOL® COMF, NINOL® M-10 und ethoxylierte Diethanolamide wie NINOL® C-4 I, NINOL® C-5, NINOL® 1301 von Stepan oder DACAMID® MAL und DACAMID® DC von Sasol.

Bevorzugt wird die Amidierung mit einem Unterschuss an Amin durchgeführt, so dass im Endprodukt möglichst wenig oder gar kein freies Amin mehr vorliegt. Da Amine generell durch ihre reizende oder ätzende Wirkung, keine vorteilhaften toxikologischen Eigenschaften haben, ist eine Minimierung der Amin-Anteile erwünscht und vorteilhaft. Bevorzugt sind die Amin-Anteile in der erfindungsgemäß verwendeten Abmischung, insbesondere die Anteile an primären und sekundären Amingruppen tragenden Verbindungen kleiner als 5 Gew.-%, besonders bevorzugt kleiner 3 Gew.-%, insbesondere bevorzugt kleiner als 1 Gew.-% bezogen auf die Summe aus Aminen und Amiden.

Im erfindungsgemäßen Verfahren wird eine Zusammensetzung (ZP), mindestens enthaltend mindestens ein Polyol und mindestens einen Katalysator, der die Ausbildung einer Urethan-, Harnstoff- oder Isocyanurat-Bindung katalysiert, eingesetzt.

Das Polyol ist erfindungsgemäß verschieden von den eingesetzten Tensiden TD. Geeignete Polyole im Sinne dieser Erfindung sind alle dem Fachmann an sich bekannten Verbindungen. Bevorzugte Polyole sind alle zur Herstellung von Polyurethan-Schäumen üblicherweise verwendeten Polyetherpolyole und Polyesterpolyole. Entsprechend den geforderten Eigenschaften der Schäume werden entsprechende Polyole verwendet, wie beispielsweise beschrieben in: US 2007/0072951 A1, WO 2007/111828 A2, US 2007/0238800, US 6359022 B1 oder WO 96 12759 A2. Ebenso werden bevorzugt verwendbare Pflanzenöl-basierende Polyole in verschiedenen Patentschriften beschrieben, wie beispielsweise in der WO 2006/094227, WO 2004/096882, US 2002/0103091, WO 2006/116456 und EP 1 678 232.

Die erfindungsgemäß eingesetzten Polyetheralkohole werden üblicherweise im Gemisch mit anderen Verbindungen mit mindestens zwei mit Isocyanatgruppen reaktiven Wasserstoffatomen eingesetzt. Als Verbindungen mit mindestens zwei gegenüber Isocyanat reaktiven Wasserstoffatomen, die gemeinsam mit den erfindungsgemäß eingesetzten Polyetheralkoholen verwendet werden können, kommen insbesondere Polyetheralkohole und/oder Polyesteralkohole mit OH-Zahlen im Bereich von 100 bis 1200 mgKOH/g zum Einsatz. Die gemeinsam mit den erfindungsgemäß eingesetzten Polyetheralkoholen verwendeten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Polyetheralkoholen verwendeten weiteren Polyetheralkohole haben zumeist eine Funktionalität zwischen 2 und 8, insbesondere 3 bis 8.

Insbesondere kommen Polyetheralkohole, die nach bekannten Verfahren, beispielsweise durch anionische Polymerisation von Alkylenoxiden in Gegenwart von Katalysatoren, vorzugsweise Aminen und/oder Alkalihydroxiden, hergestellt werden, zum Einsatz.

Als Alkylenoxide werden zumeist Ethylenoxid und/oder Propylenoxid eingesetzt.

Als Startmoleküle kommen insbesondere Verbindungen mit mindestens 2, vorzugsweise 4 bis 8 Hydroxylgruppen oder mit mindestens zwei primären Aminogruppen im Molekül zum Einsatz.

Geeignete Startermoleküle sind beispielsweise ausgewählt aus der Gruppe, enthaltend Anilin, EDA, TDA, MDA und PMDA, besonders bevorzugt aus der Gruppe, enthaltend TDA und PMDA. Insbesondere wird TDA verwendet. Bei der Verwendung von TDA können alle Isomere allein oder in beliebigen Gemischen miteinander eingesetzt werden. Insbesondere können 2,4-TDA, 2,6-TDA, Gemische aus 2,4-TDA und 2,6-TDA 2,3-TDA, 3,4-TDA, Gemische aus 3,4-TDA und 2,3-TDA, sowie Gemische aus allen genannten Isomeren eingesetzt werden. 2,3-TDA und 3,4-TDA werden häufig auch als ortho-TDA oder als vicinales TDA bezeichnet. Das TDA kann ausschließlich vicinales TDA sein. In einer besonders bevorzugten Ausführungsform des erfindungsgemäßen Verfahrens besteht das TDA zu mindestens 90 Gew.-%, besonders bevorzugt zu mindestens 95 Gew.-% und insbesondere zu mindestens 99 Gew.-%, jeweils bezogen auf das Gewicht des TDA, aus vicinalem TDA.

Als Startmoleküle mit mindestens 2, vorzugsweise 3 bis 8 Hydroxylgruppen im Molekül werden vorzugsweise Trimethylolpropan, Glycerin, Pentaerythrit, Rizinusöl, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt. Die Polyetheralkohole besitzen eine Funktionalität von vorzugsweise 2 bis 8 und Hydroxylzahlen von vorzugsweise 100 mgKOH/g bis 1200 mgKOH/g und insbesondere 120 mgKOH/g bis 570 mgKOH/g.

Gemäß einer weiteren Ausführungsform betrifft die vorliegende Erfindung demgemäß ein Verfahren zur Herstellung von Polyurethan- oder Polyisocyanuratschaumstoffen wie zuvor beschrieben, dadurch gekennzeichnet, dass das mindestens eine Polyol ausgewählt ist aus der Gruppe bestehend aus Polyetheralkoholen und Polyesteralkoholen.

Weitere geeignete Polyole werden beispielsweise in WO 2011/134866 A2, WO 2011/134856 A1, EP 1 138 709 A1, WO 2006/037540 A2, DE 41 21 161 A1 und WO 2011/107374 A1 offenbart.

Als Katalysator, der die Ausbildung einer Urethan-, Harnstoff- oder Iscyanurat-Bindung katalysiert, wird vorzugsweise ein für die Reaktionen zwischen Isocyanat-Polyol und/oder Isocyanat-Wasser und/oder Isocyanat-Trimerisierung geeigneter Katalysator eingesetzt. Geeignete Katalysatoren im Sinne dieser Erfindung sind vorzugsweise Katalysatoren, die die Gelreaktion (Isocyanat-Polyol), die Treibreaktion (Isocyanat-Wasser) und/oder die Di- bzw. Trimerisierung des Isocyanats katalysieren. Typische Beispiele für geeignete Katalysatoren sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, N,N-Dimethylbenzylamin, Dimethylaminoethanol, Dimethylaminoethoxyethanol und Bis(dimethylaminoethyl)ether, Zinnverbindungen wie Dibutylzinndilaurat, Ammoniumsalze und Kaliumsalze wie Kaliumacetat und Kalium-2-ethylhexanoat. Geeignete Katalysatoren sind beispielsweise in EP 1985642, EP 1985644, EP 1977825, US 2008/0234402, EP 0656382 B1, US 2007/0282026 A1 und den darin zitierten Patentschriften genannt.

Bevorzugte in der Zusammensetzung (ZP) vorhandene Mengen an Katalysatoren richten sich nach dem Typ des Katalysators und liegen üblicherweise im Bereich von 0,05 bis 5 Massenteile bezogen auf 100 Massenteile der Zusammensetzung (ZP) bzw. 0,1 bis 5 Massenteile bezogen auf 100 Massenteile der Zusammensetzung (ZP) für Kalium- und Ammoniumsalze.

Erfindungsgemäß erfolgt die Umsetzung der Zusammensetzung (Z1) mit dem Polyisocyanat in Gegenwart eines Nukleierungsmittels und eines Treibmittels wie zuvor beschrieben, wobei das Nukleierungsmittel vom Treibmittel verschieden ist. Bevorzugt ist das Treibmittel ein physikalisches Treibmittel, d.h. eine leichtflüchtige (Siedetemperatur kleiner 100 °C, vorzugsweise kleiner 70 °C) Flüssigkeit oder ein Gas. Bevorzugte Treibmittel sind Kohlenwasserstoffe mit 4 oder 5 Kohlenstoff-Atomen, besonders bevorzugt cyclo-, iso- und n-Pentan, sowie deren Gemische, oder gesättigte oder ungesättigte Fluorkohlenwasserstoffe, besonders bevorzugt 1,1,1,2-Tetrafluorethan (HFC-134a), 1,1,1,3,3-Pentafluorpropan (HFC-245fa), 1,1,1,3,3-Pentafluorbutan (HFC-365mfc), 1,1,1,2,3,3,3-Heptafluorpropan (HFC-227ea) 1,1-Difluorethan (HFC-152a), Trans-1,3,3,3-tetrafluor-1-propen (HFO-1234zeE), 2,3,3,3-Tetrafluor-1-propen (HFO-1234yf), Cis-1,1,1,4,4,4-Hexafluor-2-buten (HFO-1336mzz(Z)) und Trans-1,1,1,4,4,4-Hexafluor-2-buten (HFO-1336mzz(E)), gesättigte oder ungesättigte Fluorchlorkohlenwasserstoffe, besonders bevorzugt 1,1-Dichlor-1-fluorethan (HCFC-141b) und Trans-1-Chlor-3,3,3-trifluor-1-propen (HCFO-1233zd-(E)), Sauerstoff-haltige Verbindungen, besonders bevorzugt Methylformiat oder Dimethoxymethan, oder Chlorkohlenwasserstoffe, besonders bevorzugt 1,2-Dichlorethan, oder Gemische dieser Treibmittel.

Weiter betrifft die vorliegende Erfindung auch ein Verfahren zur Herstellung von Polyurethan- oder Polyisocyanuratschaumstoffen wie zuvor beschrieben, wobei als Treibmittel mindestens eine Verbindung ausgewählt aus der Gruppe enthaltend cyclo-, iso- und n-Pentan, 1,1,1,2-Tetrafluorethan (HFC-134a), 1,1,1,3,3-Pentafluorpropan (HFC-245fa), 1,1,1,3,3-Pentafluorbutan (HFC-365mfc), 1,1,1,2,3,3,3-Heptafluorpropan (HFC-227ea) 1,1-Difluorethan (HFC-152a), Trans-1,3,3,3-tetrafluor-1-propen (HFO-1234ze(E)), 2,3,3,3-Tetrafluor-1-propen (HFO-1234yf), Cis-1,1,1,4,4,4-Hexafluor-2-buten (HFO-1336mzz(Z)), Trans-1,1,1,4,4,4-Hexafluor-2-buten (HFO-1336mzz(E)), 1,1-Dichlor-1-fluorethan (HCFC-141b), Trans-1-Chlor-3,3,3-trifluor-1-propen (HFO-1233zd-(E)), cis-1-Chlor-3,3,3-trifluorpropen (HFO-1233zd(Z)), HCFO-12332d(E), Methylformiat und Dimethoxymethan enthalten ist.

Die bevorzugten Einsatzmengen an physikalischem Treibmittel richten sich nach der gewünschten Dichte des herzustellenden Schaumstoffes und liegen typischerweise im Bereich von 5 bis 40 Massenteilen bezogen auf 100 Massenteile der Zusammensetzung (ZP).

Neben physikalischen Treibmitteln können auch chemische Treibmittel enthalten sein, die mit Isocyanaten unter Gasentwicklung reagieren, wie beispielsweise Wasser oder Ameisensäure. Als Treibmittel sind solche vorzugsweise ausgeschlossen, die unter die nachfolgende Definition der in der Zusammensetzung enthaltenen Nukleierungsmittel fallen.

Als Nukleierungsmittel wird erfindungsgemäß mindestens eine Verbindung, ausgewählt aus der Gruppe umfassend perfluorierte Kohlenwasserstoffe, mindestens einen perfluorierten Kohlenwasserstoffrest aufweisenden Ethern und mindestens einen perfluorierten Kohlenwasserstoffrest aufweisendes Ketonen, eingesetzt.

Die perfluorierten Kohlenwasserstoffe können gesättigt oder ungesättig, linear, verzweigt oder cyclisch sein. Sie können auch Sauerstoff-Atome enthalten, z.B. in Form von Alkohol-, Ether-, Carbonyl- oder Carboxyl-Gruppen.

Bevorzugte Nukleierungsmittel im Rahmen der vorliegenden Erfindung sind perfluorierte Kohlenwasserstoffe, besonders bevorzugt Perfluorpentan $C_5F_{12}$, Perfluorhexan $C_6F_{14}$, Perfluorcyclohexan $C_6F_{12}$, Perfluorheptan $C_7F_{16}$ und Perfluoroctan $C_8F_{18}$.

Andere bevorzugte Stoffklassen sind perfluorierte Olefine sowie deren Dimere und Oligomere, besonders bevorzugt Olefine mit den Summenformeln $C_5F_{10}$, $C_6F_{12}$, $C_7F_{14}$ und $C_8F_{16}$, ganz besonders bevorzugt das Dimere des 1,1,2,3,3,3-Hexafluor-1-propen, insbesondere 1,1,1,2,3,4,5,5,5-nonafluor-4-(trifluormethyl)pent-2-en oder 1,1,1,3,4,4,5,5,5-nonafluor-2-(trifluormethyl)pent-2-en oder Mischungen davon.

Gemäß einer weiteren Ausführungsform betrifft die vorliegende Erfindung demgemäß ein Verfahren zur Herstellung von Polyurethan- oder Polyisocyanuratschaumstoffen wie zuvor beschrieben, dadurch gekennzeichnet, dass das Nukleierungsmittel mindestens eine Verbindung ausgewählt aus der Gruppe bestehend aus perfluorierten Kohlenwasserstoffen und mindestens einen perfluorierten Kohlenwasserstoffrest aufweisenden Ethern ist.

Gemäß einer weiteren Ausführungsform betrifft die vorliegende Erfindung ein Verfahren zur Herstellung von Polyurethan- oder Polyisocyanuratschaumstoffen wie zuvor beschrieben, dadurch gekennzeichnet, dass das Nukleierungsmittel ausgewählt ist aus der Gruppe bestehend aus Perfluorpentan $C_5F_{12}$, Perfluorhexan $C_6F_{14}$, Perfluorcyclohexan $C_6F_{12}$, Perfluorheptan $C_7F_{16}$, Perfluoroctan $C_8F_{18}$, und/oder ein oder mehrere per-fluorierte Olefine der Summenformeln $C_5F_{10}$, $C_6F_{12}$, $C_7F_{14}$, $C_8F_{16}$, Dimere des 1,1,2,3,3,3-Hexafluor-1-propen, Methoxyheptafluoropropan, Methoxynonafluorobutan und/oder Ethoxynonafluorobutan.

Werden mindestens einen perfluorierten Kohlenwasserstoffrest aufweisende Ether als Nukleierungsmittel eingesetzt, so handelt es sich dabei vorzugsweise um Methyl- oder Ethylether perfluorierter Kohlenwasserstoff-Reste, bevorzugt um Methoxyheptafluorpropan, Methoxynonafluorbutan, Ethoxyheptafluorpropan oder Ethoxynonafluorbutan.

Das Nukleierungsmittel sollte vorzugsweise eine Siedetemperatur (bei Normaldruck) im Bereich von -20 °C bis 150 °C, bevorzugt im Bereich von 0 °C bis 120 °C, besonders bevorzugt im Bereich von 20 °C bis 100 °C aufweisen.

Die Einsatzmenge an Nukleierungsmittel liegt vorzugsweise im Bereich von 0,1 bis 10 Massenteilen, bevorzugt von 0,2 bis 5 Massenteilen, besonders bevorzugt von 0,5 bis 3 Massenteilen bezogen auf 100 Massenteile der Zusammensetzung (ZP).

Gemäß einer weiteren Ausführungsform betrifft die vorliegende Erfindung demgemäß eine stabilisierte Zusammensetzung (ZS) wie zuvor beschrieben, dadurch gekennzeichnet, dass das Nukleierungsmittel in einer Menge im Bereich von 0,1 bis 10 Massenteilen bezogen auf 100 Massenteile der Zusammensetzung (ZP) eingesetzt wird.

Bevorzugte Polyolkomponenten enthalten Zucker/Glycerin und/oder Zucker-gestartete, Sorbitolgestartete und TDA-gestartete Polyole, ganz besonders vic-TDA gestartete Polyole. Besonders bevorzugte Nukleierungsmittel sind perfluorierte Olefine, und Verbindungen mit perfluorierten Resten, die eine Keto- oder Carbonylfunktion haben.

Darüber hinaus können in dem erfindungsgemäßen Verfahren weitere Komponenten wie beispielsweise Schaumstabilisatoren, Vernetzer, Flammschutzmittel, Füllstoffe, Farbstoffe, Antioxidantien und Verdicker / Rheologie-Additive eingesetzt werden. Diese weiteren Komponenten sind vorzugsweise keine Tenside TD. Die weiteren Komponenten können in der Zusammensetzung (ZS), (Z1), (Z2) und/oder (ZP) enthalten sein. Vorzugsweise sind die weiteren Komponenten in den Zusammensetzungen (ZS), (Z1) und/oder (ZP), bevorzugt in den Zusammensetzungen (ZS), (Z1) und (ZP), besonders bevorzugt in der Zusammensetzung (ZP) vorhanden.

Als Schaumstabilisator können oberflächenaktive Substanzen, die von den Tensiden TD verschieden sind, bevorzugt Silicon-Tenside (Polyether-Polydimethylsiloxan-Copolymere), enthalten sein. Typische Einsatzmengen an Schaumstabilisatoren, bevorzugt Polyethersiloxan-Schaumstabilisatoren liegen bei 0,5 bis 5 Massenteilen pro 100 Massenteile der Zusammensetzung (ZP), bevorzugt bei 1 bis 3 Massenteilen pro 100 Massenteile der Zusammensetzung (ZP), eingesetzt werden. Geeignete Silicon-Tenside werden z. B. in EP 1873209, EP 1544235, DE 10 2004 001 408, EP 0839852, WO 2005/118668, US 20070072951, DE 2533074, EP 1537159 EP 533202, US 3933695, EP 0780414, DE 4239054, DE 4229402 und EP 867464 beschrieben und z. B. unter dem Markennamen Tegostab® von der Evonik Industries vertrieben. Die Herstellung der Siloxane kann wie im Stand der Technik beschrieben erfolgen. Besonders geeignete Beispiele zur Herstellung sind z. B. in US 4,147,847, EP 0493836 und US 4,855,379 beschrieben.

Als Flammschutzmittel können erfindungsgemäß alle bekannten und zur Herstellung von Polyurethan-Schäumen geeigneten Flammschutzmittel eingesetzt werden. Geeignete Flammschutzmittel im Sinne dieser Erfindung sind bevorzugt flüssige organische PhosphorVerbindungen, wie halogenfreie organische Phosphate, z.B. Triethylphosphat (TEP), Diphenylkresylphosphat (DPK), Trikresylphosphat (TPK), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Vorzugsweise sind die Flammschutzmittel Verbindungen enthaltend Phosphor und/oder Halogen, insbesondere Brom. Es können jedoch auch Flammschutzmittel auf Basis von Bor verwendet werden. Vorzugsweise ist das Flammschutzmittel ausgewählt aus der Gruppe bestehend aus polybromierten Verbindungen und organisehen Phosphorverbindungen. Polybromierte Verbindungen sind alle Verbindungen, die mindestens zwei Bromatome pro Molekül enthalten. Bevorzugte polybromierte Verbindungen sind insbesondere: Pentabromtoluol, Pentabromphenylallylether, Pentabromethylbenzol, Decabromdiphenyl, Pentabromdiphenyloxid, Octabromdiphenyloxid, Decabromdiphenyloxid, Ethylenbis(tetrabromphthalimid), Tetradecabromdiphenoxybenzol, Ester-Ether von Tetrabromphthalsäureanhydrid, Tetrabromneopentylglykol und seine Derivate.

Organische Phosphorverbindungen sind Verbindungen, die mindestens ein Phosphoratom und mindestens ein Kohlenstoffatom enthalten, insbesondere organische Phosphate, Phosphonate, Phosphinate, Phosphite, Phosphonite, Phosphinite und Phosphinoxide.

Im Rahmen der vorliegenden Erfindung bevorzugte organische Phosphorverbindungen sind insbesondere solche mit einer P=O-Doppelbindung, insbesondere Organophosphate, Organophosphonate und Organophosphinoxide. Die Vorsilbe Organo kennzeichnet dabei das Vorliegen einer organischen Verbindung in oben genanntem Sinne, und ist nicht auf das Vorliegen einer C-P-Bindung beschränkt. Unter Organophosphat sind organische Verbindungen zu verstehen, in denen die P- OH-Gruppen der Phophorsäure durch P-OR ersetzt sind, wobei jedes R gleich oder unterschiedlich sein kann und unabhängig voneinander einen organischen Rest darstellt, insbesondere eine Kohlenwasserstoffgruppe, die aliphatisch, araliphatisch oder aromatisch sein kann und die weitere funktionelle Gruppen enthalten kann.

Unter Organophosphonat sind organische Verbindungen zu verstehen, in denen die P- OH-Gruppen der Phosphonsäure durch P-OR und die P-H-Gruppen durch P-R ersetzt sind, wobei jedes R gleich oder unterschiedlich sein kann und unabhängig voneinander einen organischen Rest darstellt, insbesondere eine Kohlenwasserstoffgruppe, die aliphatisch, araliphatisch oder aromatisch sein kann und die weitere funktionelle Gruppen enthalten kann. Unter Organophosphinoxid sind organische Verbindungen der Struktur $R_3P=O$ zu verstehen, wobei jedes R gleich oder unterschiedlich sein kann und unabhängig voneinander einen organischen Rest darstellt, insbesondere eine Kohlenwasserstoffgruppe, die aliphatisch, araliphatisch oder aromatisch sein kann und die weitere funktionelle Gruppen enthalten kann.

Bevorzugte Organophosphorsäurederivate sind solche der Struktur $OP(OR)_3$, wobei jedes R unabhängig voneinander eine aliphatische, araliphatische oder aromatische Kolhlenwasserstoffgruppe mit von 1 bis 20 Kohlenstoffatomen ist, die weitere funktionelle Gruppen tragen kann, wie zum Beispiel Etherverknüpfungen, Halogenatome sowie gegenüber Isocyanate reaktive Gruppen, insbesondere OH- Gruppen und/oder $NH_2$-Gruppen. Bevorzugte Organophosphate sind insbesondere Triaryl und Trialkylphosphate wie Diphenylkresylphosphat, Trikresylphosphat, Triethylphosphat, 2- Ethylhexyldiphenylphosphat und Phosphorsäure-1 ,3-phenylen-tetraphenylester sowie Tris-(2-chlorpropyl)-phosphat.

Bevorzugte Organophosphonate sind solche der Struktur $RPO(OR)_2$, wobei jedes R unabhängig voneinander eine aliphatische, araliphatische oder aromatische Kohlenwasserstoffgruppe mit von 1 bis 20 Kohlenstoffatomen ist, die weitere funktionelle Gruppen tragen kann, wie zum Beispiel Etherverknüpfungen, Halogenatome sowie gegenüber Isocyanate reaktive Gruppen, insbesondere OH-Gruppen und/oder $NH_2$- Gruppen. Bevorzugte Organophosphonate sind insbesondere Triaryl- und Trialkylphosphonate, Diethyl-N,N-bis(2-hydroxyethyl)aminomethylphosphonat, Tetraalkyldiphosphonatverbindungen, Dimethylmethanphosphonat, Diethylethanphosphonat und dergleichen, sowie Phosphorpolyole und oxalkylierten Alkylphosphonsäurederivate.

Bevorzugte Organophosphinoxide sind solche der Struktur $OPR_3$, wobei jedes R unabhängig voneinander eine aliphatische, araliphatische oder aromatische Kohlenwasserstoffgruppe mit von 1 bis 20 Kohlenstoffatomen ist, die weitere funktionelle Gruppen tragen kann, wie zum Beispiel Etherverknüpfungen, Halogenatome sowie gegenüber Isocyanate reaktive Gruppen, wie zum Beispiel Etherverknüpfungen, Halogenatome sowie gegenüber Isocyanate reaktive Gruppen, insbesondere OH-Gruppen und/oder NH -Gruppen. Bevorzugte Organophosphinoxide sind insbesondere Bis(hydroxymethyl)isobutylphosphinoxid, Bis(3-hydroxypropyl)isobutylphosphinoxid, Triethylphosphinoxid, Dimethyldecylphosphinoxid, Tributylphosphinoxid, Tris(2- ethylhexyl)phosphinoxid, Methyldiphenylphosphinoxid, Trioctylphosphinoxid,Triphenylphosphinoxid und Tris(2-methylphenyl)phosphinoxid.

Vorgenannte Flammschutzmittel können einzeln oder als Kombination von zwei oder mehreren der vorgenannten Verbindungen eingesetzt werden. Die Flammschutzmittel können wie weiter oben ausgeführt ein oder mehrere funktionelle Gruppen enthalten.

Besonders bevorzugte Flammschutzmittel sind folgende: Tris(2-chlor-1 - methylethyl)phosphat, Diethylethylphosphonat , Dimethylpropylphosphonat, Tri(isopropylphenyl)phosphat (Reofos 95), Oligomere Chloroalkylphosphatester (Fyrol 99), Resorcinol-bis(diphenylphosphate), 2-(2-Hydroxyethoxy)ethyl-2-hydroxypropyl3,4,5,6-tetrabromphthalat, Bis(hydroxymethyl)isobutylphosphinoxid, Bis(3- hydroxypropyl)isobutylphosphinoxid und Trioctylphosphinoxid.

Als weitere Additive können erfindungsgemäß auch nach dem Stand der Technik bekannte weitere Komponenten eingesetzt werden, wie z. B. Polyether, Nonylphenolethoxylate oder nichtionische Tenside, die alle keine Tenside gemäß der Definition für die Tenside TD sind.

Die vorliegende Erfindung betrifft auch ein Kit zur Herstellung einer stabilisierten Zusammensetzung (ZS) für die Herstellung eines Polyurethan- oder Polyisocyanuratschaumstoffs, bestehend aus einer Zusammensetzung (Z1) und einer Zusammensetzung (Z2), sowie eine stabilisierte Zusammensetzung (ZS) wie zuvor beschrieben. Bevorzugte Komponenten der jeweiligen Zusammensetzungen des Kits bzw. der stabilisierten Zusammensetzung (ZS) sind die zuvor im Zusammenhang mit dem erfindungsgemäßen Verfahren beschriebenen bevorzugten Verbindungen.

Die erfindungsgemäßen stabilisierten Zusammensetzungen (ZS) können z. B. zur Herstellung von Polyurethan- oder Polyisocyanuratschaumstoffen, insbesondere Hartschäumen verwendet werden. Dazu wird eine erfindungsgemäße stabilisierte Zusammensetzung (ZS) mit einer Isocyanatkomponente umgesetzt, insbesondere verschäumt. Dabei kann die Isocyanatkomponente der stabilisierten Zusammensetzung direkt zugesetzt werden, beispielsweise kurz vor der eigentlichen Umsetzung. Bevorzugt wird jedoch die stabilisierte Zusammensetzung (ZS) mit einer separat gelagerten Isocyanatkomponente umgesetzt.

In dem erfindungsgemäßen Verfahren können im Rahmen der vorliegenden Erfindung alle geeigenten Polyisocyanate eingesetzt werden. Als Isocyanatkomponente sind alle zur Herstellung von Polyurethan-Schäumen, insbesondere Polyurethan- oder Polyisocyanurat-Hartschaumstoffen, geeigneten Isocyanatverbindungen verwendbar. Vorzugsweise weist die Isocyanat-Komponente ein oder mehrere organische Isocyanate mit zwei oder mehr Isocyanat-Funktionen auf.

Die mehrfunktionellen Isocyanate können insbesondere auch als Mischungen eingesetzt werden. In Betracht kommende mehrfunktionelle Isocyanate weisen zwei (im folgenden Diisocyanate genannt) oder mehr als zwei Isocyanatgruppen pro Molekül auf.

Im einzelnen seien beispielhaft genannt: 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'- und 2,4'-Diphenylmethandiisocyanaten und bei der Herstellung von Polyurethan-Hartschaumstoffen insbesondere Mischungen aus 4,4'-, 2,4'- und 2,2'-Diphenylmethan-diisocyanaten und Polyphenyl-polymethylenpolyisocyanaten (Roh-MDI).

Insbesondere geeignet sind 2,2'-, 2,4'- und/oder 4,4'-Diphenylmethandiisocyanat (MDI), 1,5-Naphthylendiisocyanat (MDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Penta-methylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1 ,3-Bis(isocyanatomethyl) cyclohexan (HXDI), 1 ,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat. Als mehrfunktionelle Isocyanate sind aromatische Isocyanate bevorzugt. Besonders bevorzugt sind als mehrfunktionelle Isocyanate:

i) Mehrfunktionelle Isocyanate auf Basis von Toluylendiisocyanat (TDI), insbesondere 2,4-TDI oder 2,6-TDI oder Mischungen aus 2,4- und 2,6-TDI;

ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;

iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt. Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI, üblicherweise katalysiert durch Salzsäure, als Zwischenprodukt der Herstellung von Roh-MDI entsteht.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Weiter betrifft die vorliegende Erfindung demgemäß ein Verfahren zur Herstellung von Polyurethan- oder Polyisocyanuratschaumstoffen wie zuvor beschrieben, dadurch gekennzeichnet, dass das mindestens eine Polyisocyanat ausgewählt ist aus der Gruppe bestehend aus aromatischen mehrwertigen Isocyanaten.

Beispiele für geeignete Isocyanate sind in EP 1 712 578 A1, EP 1 161 474, WO 058383 A1, US 2007/0072951 A1, EP 1 678 232 A2 und der WO 2005/085310 genannt.

Das Verhältnis von Polyol zu Isocyanat, ausgedrückt als Index, liegt erfindungsgemäß vorzugsweise im Bereich von 100 bis 450, bevorzugt 100 bis 150. Der Index beschreibt dabei das Verhältnis von tatsächlich eingesetztem Isocyanat zu berechnetem Isocyanat (für eine stöchiometrische Umsetzung mit Polyol). Ein Index von 100 steht für ein molares Verhältnis der reaktiven Gruppen von 1 zu 1.

Geeignete Reaktionsbedingungen für die Umsetzung der Zusammensetzung (Z1) bzw. der stabilisierten Zusammensetzung (ZS) mit dem Polyisocyanat sind dem Fachmann bekannt.

Das erfindungsgemäße Verfahren zur Herstellung von Polyurethanschäumen, insbesondere Polyurethanhartschäumen, kann nach den bekannten Methoden durchgeführt werden, beispielsweise im Handmischverfahren oder bevorzugt mit Hilfe von Verschäumungsmaschinen. Wird das Verfahren mittels Verschäumungsmaschine durchgeführt, können Hochdruck- oder Niederdruckmaschinen verwendet werden. Das erfindungsgemäße Verfahren kann sowohl diskontinuierlich als auch kontinuierlich durchgeführt werden.

Eine zusammenfassende Darstellung des Stands der Technik, der verwendbaren Rohstoffe und anwendbaren Verfahren findet sich in "Ullmann's Encyclopedia of Industrial Chemistry" Vol. A21, VCH, Weinheim, 4. Auflage 1992, S. 665 bis 715.

Durch die Verwendung der erfindungsgemäßen stabilisierte Zusammensetzung (ZS) bei der Herstellung von Polyurethanhartschäumen bzw. durch das erfindungsgemäße Verfahren sind vorteilhafte Polyurethanschäume zugänglich.

Demgemäß betrifft die vorliegende Erfindung auch einen Polyurethan- oder Polyisocyanuratschaumstoff, erhältlich oder erhalten durch ein Verfahren wie zuvor beschrieben. Die vorliegende Erfindung betrifft auch einen Polyurethan- oder Polyisocyanuratschaumstoff, erhältlich oder erhalten unter Verwendung eines Kits wie zuvor beschrieben

Die erfindungsgemäßen Polyurethanschäume weisen insbesondere gute wärmedämmende Eigenschaften auf.

Eine bevorzugte Polyurethan- bzw. Polyisocyanurat-Hartschaumformulierung im Sinne dieser Erfindung ergibt ein Raumgewicht von 20 bis 150 kg/m$^3$ und hat vorzugsweise die in Tabelle 2 genannte Zusammensetzung.

Tabelle 2:

| Zusammensetzung einer erfindungsgemäßen Polyurethan- bzw. Polyisocyanurat-Hartschaumformulierung | | | | |
|---|---|---|---|---|
| **Zusammensetzung** | | | **Komponente** | **Gewichtsteile** |
| ZS | Z1 | ZP | Polyol | 10-98 |
| | | | Amin-Katalysator | 0,05 bis 5 |
| | | | Kalium-Trimerisierungskatalysator | 0 bis 5 |
| | | | Schaumstabilisator | 0,5 bis 5 |
| | | | Wasser | 0,1 bis 5 |
| | | | Flammschutzmittel | 0 bis 50 |
| | | | | **Summe 100** |
| | | TD | Tenside | 0,05 bis 10 |
| | Z2 | | Treibmittel | 5 bis 40 |
| | | | Nuklierungsmittel | 0,1 bis 10 |
| Isocyanat-Index: 80 - 500 | | | | |

Die erfindungsgemäßen Polyurethanschäume, insbesondere Polyurethanhartschäume, enthaltend mindestens ein Tensid TD wie vorstehend definiert und/oder ein Umsetzungsprodukt des Tensids TD mit einer Isocyanatkomponente, und mindestens ein Nukleierungsmittel, wie vorstehend definiert, zeichnen sich dadurch aus, dass das Massenverhältnis von Nukleierungsmittel zu diesen Tensiden TD im Bereich von 10 zu 1 bis 1 zu 10, vorzugsweise im Bereich von 5 zu 1 bis 1 zu 5, besonders bevorzugt im Bereich von 3 zu 1 bis 1 zu 3 liegt Vorzugsweise enthalten die erfindungsgemäßen Polyurethanschäume, insbesondere Polyurethan- oder Polyisocyanurat-Hartschäume von 0,03 bis 5 Massen-%, bevorzugt 0,3 bis 2,5 Massen-% und besonders bevorzugt von 0,75 bis 1,35 Massen-% an Tensid TD in gebundener und/oder ungebundener Form.

Die vorliegende Erfindung betrifft auch Polyurethan- oder Polyisocyanuratschaumstoffe, enthaltend mindestens ein Tensid TD, wie zuvor definiert, und/oder ein Umsetzungsprodukt des Tensids TD mit einer Isocyanatkomponente, und mindestens ein Nukleierungsmittel, wie zuvor definiert, dadurch gekennzeichnet, dass das Massenverhältnis von Nukleierungsmitteln zu den Tensiden TD im Bereich von 10 zu 1 bis 1 zu 10 liegt.

Bevorzugte erfindungsgemäße Polyurethanschäume, insbesondere Polyurethanhartschäume, die durch das erfindungsgemäße Verfahren oder die Verwendung der erfindungsgemäßen stabilisierte Zusammensetzung (ZS) hergestellt wurden, weisen in frischem (d.h. für 24 h bei Raumtemperatur ausgehärtet) Zustand bei 23°C gemessen üblicherweise eine Wärmeleitfähigkeit kleiner 21 mW/m•K, bevorzugt kleiner 20 mW/m•K auf, bestimmt mittels eines 2-Platten-Wärmeleitfähigkeits-Meßgerätes "Lambda Control" der Firma Hesto.

Die erfindungsgemäßen Polyurethanschäume (Polyurethan- oder Polyisocyanuratschaumstoffe), insbesondere Polyurethanhartschäume, können als oder zur Herstellung von Isoliermaterialien, vorzugsweise Dämmplatten, Sandwichelementen, Warmwasserspeichern, Boilern, Kühlapparaturen, Isolierschäumen, Kühlgeräten oder Gefriergeräten verwendet werden.

Somit betrifft die vorliegende Erfindung auch die Verwendung eines Polyurethan- oder Polyisocyanuratschaumstoffs wie zuvor beschrieben als oder zur Herstellung von Isoliermaterialien, vorzugsweise Dämmplatten, Sandwichelementen, Warmwasserspeichern, Boilern, Kühlapparaturen, Isolierschäumen, Kühlgeräten oder Gefriergeräten.

Weiter betrifft die vorliegende Erfindung eine Dämmplatte, Sandwichelement, Warmwasserspeicher, Boiler, Kühlapparatur, Isolierschaum, Kühlgerät oder Gefriergerät, das als Isoliermaterial einen Polyurethanschaum wie zuvor beschrieben aufweist.

Erfindungsgemäße Kühlapparaturen zeichnen sich dadurch aus, dass sie als Isoliermaterial einen erfindungsgemäßen Polyurethanschaum (Polyurethan- oder Polyisocyanuratschaumstoff), insbesondere Polyurethanhartschaum, aufweisen.

Die vorliegende Erfindung betrifft auch die Verwendung mindestens eines Tensid TD, welches kein Siliziumatom und einen HLB-Wert kleiner 10 aufweist, zur Stabilisierung einer Zusammensetzung, mindestens enthaltend mindestens ein Polyol und mindestens ein Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, wobei der Anteil der Summe der Tenside TD in der Zusammensetzung von 0,05 bis 10 Massenteile in 100 Massenteile der Zusammensetzung (ZP) beträgt.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.

1. Verfahren zur Herstellung von Polyurethan- oder Polyisocyanuratschaumstoffen umfassend die Umsetzung

    (a) einer Zusammensetzung (Z1), enthaltend

        (i) eine Zusammensetzung (ZP) mindestens enthaltend ein Polyol und einen Katalysator, der die Ausbildung einer Urethan-, Harnstoff- oder Isocyanurat-Bindung katalysiert, und
        (ii) ein Tensid TD, welches kein Siliziumatom und einen HLB-Wert kleiner 10 aufweist, enthält, wobei der Anteil der Summe der Tenside TD in der stabilisierten Zusammensetzung von 0,05 bis 10 Massenteile pro 100 Massenteile der Zusammensetzung (ZP) beträgt,

    (b) mit mindestens einem Polyisocyanat,

wobei die Umsetzung in Gegenwart eines Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und eines Treibmittels stattfindet, wobei das Nukleierungsmittel vom Treibmittel verschieden ist.

2. Verfahren gemäß Ausführungsform 1, wobei das Treibmittel der Zusammensetzung (Z1) vor der Umsetzung mit dem mindestens einen Polyisocyanat zugesetzt wird.

3. Verfahren gemäß Ausführungsform 1 oder 2, wobei das Nukleierungsmittel und das Treibmittel unter Erhalt einer Zusammensetzung (Z2) gemischt werden und die Zusammensetzung (Z2) der Zusammensetzung (Z1) vor der Umsetzung mit dem mindestens einen Polyisocyanat zugesetzt wird.

4. Verfahren gemäß einer der Ausführungsformen 1 bis 3, dadurch gekennzeichnet, dass das Tensid TD mindestens eine Verbindung der Formel (I) ist,

$$R\text{-}[C(O)]_x\text{-}Y \qquad (I)$$

mit C(O) einer Carbonylgruppe, x = 0 oder 1, R ein linearer, verzweigter oder cyclischer, gesättigter oder ungesättigter Kohlenwasserstoffrest, mit mindestens 4, vorzugsweise von 8 bis 30, bevorzugt von 9 bis 20 und besonders bevorzugt 9 bis 18 Kohlenstoffatomen, und Y = $O\text{-}R^1$ oder $NR^1R^2$ oder $O\text{-}CH_2\text{-}CH(OR^3)\text{-}CH_2OH$, jeweils mit $R^1$ und $R^2$ gleiche oder verschiedene Reste $(C_nH_{2n}O)_m\text{-}H$, wobei n = 2 bis 4, vorzugsweise n = 2 bis 3, besonders bevorzugt n = 2 ist, sowie m = 0 - 15, bevorzugt m = 0 - 10, besonders bevorzugt m = 0 oder 1 - 6, und mit $R^3$ = H oder R' oder C(O)R', wobei R' ein Kohlenwasserstoffrest wie für R definiert ist und gleich oder verschieden zum Rest R sein kann.

5. Verfahren gemäß einer der Ausführungsformen 1 bis 4, dadurch gekennzeichnet, dass das Tensid TD Iso-Tridecanol oder Iso-Nonanol ist.

6. Verfahren gemäß einer der Ausführungsformen 1 bis 5, dadurch gekennzeichnet, dass das Nukleierungsmittel mindestens eine Verbindung ausgewählt aus der Gruppe bestehend aus perfluorierten Kohlenwasserstoffen und mindestens einen perfluorierten Kohlenwasserstoffrest aufweisenden Ethern ist.

7. Verfahren gemäß einer der Ausführungsformen 1 bis 6, dadurch gekennzeichnet, dass das Nukleierungsmittel in einer Menge im Bereich von 0,1 bis 10 Massenteilen bezogen auf 100 Massenteile der Zusammensetzung (ZP) eingesetzt wird.

8. Verfahren gemäß einer der Ausführungsformen 1 bis 7, dadurch gekennzeichnet, dass das Nukleierungsmittel ausgewählt ist aus der Gruppe bestehend aus Perfluorpentan $C_5F_{12}$, Perfluorhexan $C_6F_{14}$, Perfluorcyclohexan $C_6F_{12}$, Perfluorheptan $C_7F_{16}$, Perfluoroctan $C_8F_{18}$, und/oder ein oder mehrere per-fluorierte Olefine der Summenformeln $C_5F_{10}$, $C_6F_{12}$, $C_7F_{14}$, $C_8F_{16}$, Dimere des 1,1,2,3,3,3-Hexafluor-1-propen, Methoxyheptafluoropropan, Methoxynonafluorobutan und/oder Ethoxynonafluorobutan.

9. Verfahren gemäß einer der Ausführungsformen 1 bis 8, dadurch gekennzeichnet, dass das mindestens eine Polyol ausgewählt ist aus der Gruppe bestehend aus Polyetheralkoholen und Polyesteralkoholen.

10. Verfahren gemäß einer der Ausführungsformen 1 bis 9, dadurch gekennzeichnet, dass das mindestens eine Polyisocyanat ausgewählt ist aus der Gruppe bestehend aus aromatischen mehrwertigen Isocyanaten.

11. Kit zur Herstellung einer stabilisierten Zusammensetzung (ZS) für die Herstellung eines Polyurethan- oder Polyisocyanuratschaumstoffs, bestehend aus

(I) einer Zusammensetzung (Z1), mindestens enthaltend
eine Zusammensetzung (ZP) enthaltend mindestens ein Polyol und mindestens einen Katalysator, der die Ausbildung einer Urethan-, Harnstoff- oder Isocyanurat-Bindung katalysiert, und
mindestens ein Tensid TD, welches kein Siliziumatom und einen HLB-Wert kleiner 10 aufweist, enthält, wobei der Anteil der Summe der Tenside TD in der stabilisierten Zusammensetzung von 0,05 bis 10 Massenteile pro 100 Massenteile der Zusammensetzung (ZP) beträgt, und

(II) einer Zusammensetzung (Z2), mindestens enthaltend
ein Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und
ein Treibmittel, wobei das Nukleierungsmittel vom Treibmittel verschieden ist.

12. Stabilisierte Zusammensetzung (ZS), mindestens enthaltend

(a) mindestens eine Zusammensetzung (ZP) mindestens enthaltend mindestens ein Polyol und mindestens einen Katalysator, der die Ausbildung einer Urethan-, Harnstoff- oder Isocyanurat-Bindung katalysiert,
(b) mindestens ein Tensid TD, welches kein Siliziumatom und einen HLB-Wert kleiner 10 aufweist, enthält, wobei der Anteil der Summe der Tenside TD in der stabilisierten Zusammensetzung (ZS) von 0,05 bis 10 Massenteile pro 100 Massenteile der Zusammensetzung (ZP) beträgt,
(c) mindestens ein Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen,
(d) mindestens ein Treibmittel, wobei das Treibmittel vom Nukleierungsmittel verschieden ist,

wobei die Zusammensetzung (ZS) eine phasenstabile Flüssigkeit ist, dadurch gekennzeichnet, dass die Zusammensetzung (ZS) mit bloßem Auge betrachtet bei einer Umgebungstemperatur von 20°C nicht aus mehreren Phasen besteht.

13. Polyurethan- oder Polyisocyanuratschaumstoff, erhältlich oder erhalten durch ein Verfahren gemäß einer der Ausführungsformen 1 bis 10 oder unter Verwendung einer stabilisierten Zusammensetzung (ZS) gemäß Ausführungsform 11 oder 12.

14. Verwendung eines Polyurethan- oder Polyisocyanuratschaumstoffs gemäß Ausführungsform 13 als oder zur Herstellung von Isoliermaterialien, vorzugsweise Dämmplatten, Sandwichelementen, Warmwasserspeichern, Boilern, Kühlapparaturen, Isolierschäumen, Kühlgeräten oder Gefriergeräten.

15. Dämmplatte, Sandwichelement, Warmwasserspeicher, Boiler, Kühlapparatur, Isolierschaum, Kühlgerät oder Gefriergerät, das als Isoliermaterial einen Polyurethanschaum gemäß Ausführungsform 13 aufweist.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**Beispiele:**

1. Allgemeine Methoden:

1.1 Messung der Hydroxylzahl:

Die Hydroxylzahlen wurden nach der DIN53240 bestimmt.

1.2 Herstellung der stabilisierten Zusammensetzung (ZS):

Die stabilisierte Zusammensetzung wird folgendermaßen erhalten:

Es wird eine Zusammensetzung (ZP) bestehend aus Polyolmix, Katalysatormischung, Stabilisator und Wasser in den Mengen, wie in den Beispielen angegeben, durch Vermischen der Bestandteile hergestellt und dann vorgelegt. Das Tensid TD wird, wie in den Beispielen beschrieben, unter Rühren hinzugefügt unter Erhalt der Zusammensetzung Z1. Die Zusammensetzung Z2 bestehend aus dem Nukleierungsmittel und dem Treibmittel, wie in den Beispielen angegeben, wird ebenfalls durch Vermischen der Bestandteile erhalten. Z2 wird unter Rühren zu Z1 gegeben unter Erhalt der stabilisierten Zusammensetzung (ZS). Alle Zusammensetzungen Z1, Z2 und ZS sind klar und zeigen keine mit dem bloßen Auge wahrnehmbare Trübung oder Tröpfchenbildung.

1.3. Bestimmung der Trübung der ZS:
Wie unter 1.2 allgemein beschrieben, wird die Polyolkomponente (ZP) in einem DreihalsKolben mit mechanischem Rührer und Thermometer vorgelegt und anschließend das Tensid TD wie in den Beispielen beschrieben hinzugegeben unter Erhalt einer Zusammensetzung Z1. Dann wird eine Zusammensetzung Z2 bestehend aus dem Nukleierungsmittel und dem Treibmittel wie in den Beispielen angegeben hinzugefügt. Der Kolben wird gasdicht verschlossen und die Mischung für ca. 30 min mit einem Vollrathrührer mit 1500 Umdrehungen/min bei Raumtemperatur gerührt. Die erhaltene Mischung wird bei Raumtemperatur gasdicht gelagert und die Trübung optisch bestimmt. Dabei wird von einer klaren Lösung gesprochen, wenn mit bloßem Auge keine Phasentrennung oder Tröpfchenbildung erkennbar ist.

2. Herstellung der Polyurethan-Hartschaumstoffe

2.1 Angaben zu den Einsatzstoffen:
Polyolmischung bestehend aus:

Polyol 1:    Polyetherol auf Basis Saccharose, Glycerin und Propylenoxid.

Polyol 2:    Polyetherol auf Basis vic-TDA, Propylenoxid.

Polyol 3     Polyetherol auf Basis vic-TDA, Ethylenoxid und Propylenoxid.
Die in den Beispielen eingesetzte Polyolmischung besteht aus den o.g. Polyolen 1 bis 3, wobei Polyol 1 zwischen 40-70%, Polyol 2 zwischen 15-50% und Polyol 3 zwischen 5-25% enthalten ist.

Katalysatormischung bestehend aus:

Katalysator 1:    Dimethylcyclohexylamin
Katalysator 2:    Pentamethyldiethylentriamin
Katalysator 3:    Tris(dimethylaminopropyl)hexahydro-1,3,5-triazin

Die in den Beispielen eingesetzte Katalysatormischung besteht aus den o.g. Katalysatoren 1 bis 3, wobei Katalysator 1 zwischen 20-60%, Katalysator 2 zwischen 20-50% und Katalysator 3 zwischen 15-40% enthalten ist.

Stabilisator:         Silikonstabilisator von Evonik, z.B. Tegostab B8467
Treibmittel 1:        Cyclopentan (CP95)
Treibmittel 2:        Cyclopentan/Isopentan 70/30 (CP70)
Treibmittel 3:        1,1,1,3,3-Pentafluorpropan (HFC-245fa)
Nukleierungsmittel:   FA-188 (von 3M)
Tensid TD 1:          Isotridecanol N von BASF
Tensid TD 2:          Cocoamid DEA (REWOMID® DC 212 S von Evonik Industries AG)
Isocyanat:            Polymer-MDI (Lupranat® M20) von BASF

2.2 Laborversuche:

Die Isocyanat-Komponente und stabilisierte Zusammensetzung (ZS) werden auf 20 ± 0,5 °C temperiert. Die stabilisierte Zusammensetzung wird dabei erhalten, wie oben unter 1.2 beschrieben. Die stabilisierte Zusammensetzung wird in einem 735 ml Papierbecher (PEbeschichtet) vorgelegt, die Isocyanat-Komponente zugewogen und das Reaktionsgemisch mit einem Scheibenrührer der Fa. Vollrath gerührt. Bei Rührbeginn wird die Stoppuhr gestartet. Anschließend werden die Startzeit, Abbindezeit und Rohdichte nach folgenden Kriterien bestimmt:

Die Startzeit ist definiert als die Zeitspanne zwischen Rührbeginn und dem Anfang der Volumenexpansion des Reaktionsgemisches durch Schaumbildung.

Die Abbindezeit beschreibt die Zeit vom Beginn der Durchmischung bis zum Zeitpunkt des Reaktionsvorganges, an dem sich aus der Schaummasse mit einem Glasstab Fäden herausziehen lassen.

Rohdichtebestimmung:

Nach Aushärten des Schaumes schneidet man die Schaumkrone ab. Der Schnitt wird am Rand des Prüfgefäßes senkrecht zur Steigrichtung geführt, so dass Schaumanschnitt und oberer Rand des Prüfgefäßes in einer Ebene liegen. Der Becherinhalt wird gewogen und die freigeschäumte Rohdichte (RD in kg/m$^3$) nach Formel unten berechnet.

$$RD = \frac{(m_1 - m_2) * 1000}{V}$$

wobei

$m_1$= Schaumgewicht und Gewicht des Prüfgefäßes in g
$m_2$= Gewicht des Prüfgefäßes in g
V= Volumen des Prüfgefäßes in ml

Die folgende Tabelle fasst die Rezeptierung der Laborversuche (Zahlenangaben in Gewichtsteilen) und deren Ergebnisse zusammen.

| | | | Zusammensetzung | L1 | L2 | L3 | L4 | L5 | L6 | L7 |
|---|---|---|---|---|---|---|---|---|---|---|
| ZS | Z1 | ZP | Polyolmischung | 92,5 | 92,5 | 89,7 | 92,5 | 92,5 | 92,5 | 92,5 |
| | | | Katalysatormischung | 2,1 | 2,1 | 2,1 | 2,1 | 2,1 | 2,1 | 2,1 |
| | | | Stabilisator | 2,8 | 2,8 | 2,8 | 2,8 | 2,8 | 2,8 | 2,8 |
| | | | Wasser | 2,6 | 2,6 | 2,6 | 2,6 | 2,6 | 2,6 | 2,6 |
| | | | Tensid TD 1 | 3 | 3 | 2 | 3 | 3 | 3 | 3 |
| | | | Tensid TD 2 | | | 1 | | | | |
| | Z2 | | Treibmittel 1 | 10 | 15 | 15 | | | | |
| | | | Treibmittel 2 | | | | 10,1 | 15,1 | | |
| | | | Treibmittel 3 | | | | | | 19,1 | 28,6 |
| | | | Nukleierungsmittel | 1 | 1 | 1 | 1 | 1 | 1 | 1 |
| | | | Summe der Gewichtsteile der ZS | 114 | 119 | 119 | 114,1 | 119,1 | 123,1 | 132,6 |
| | | | | | | | | | | |
| | | | Trübung ZS | keine | keine | keine | keine | keine | keine | keine |
| | | | | | | | | | | |
| | | | ZS verschäumt mit | | | | | | | |
| | | | **Lupranat ® M20S** | 151 | 151 | 151 | 151 | 151 | 151 | 151 |
| | | | | | | | | | | |
| | | | **Eigenschaften** | | | | | | | |
| | | | Startzeit [s] | 8 | 10 | 10 | 8 | 10 | 10 | 10 |
| | | | Abbindezeit [s] | 56 | 64 | 60 | 55 | 64 | 60 | 70 |
| | | | Rohdichte [g/l] | 32,1 | 27,2 | 25,5 | 31,1 | 27,2 | 31,6 | 27,7 |

Die Treibmittelanteile wurden so angepasst, dass immer gleiche molare Anteile eingesetzt wurden.

2.3 Zusammenfassung der Ergebnisse:

Alle Zusammensetzungen (ZP) mit verschiedenen Tensiden TD (ergibt Z1) sind nach Zugabe der verschiedenen Treibmittel zusammen mit dem Nukleierungsmittel (Z2) zunächst trüb. Bei Verwendung von Tensiden TD verschwindet die Trübung aber vollständig nach wenigen Minuten bis Stunden. Eine Phasenseparation kann mit dem bloßen Auge nicht mehr beobachtet werden. Wenn kein Tensid TD in der Zusammensetzung Z1 verwendet wird, bleiben alle ZS auch nach Wochen noch trüb und separieren in Phasen.

2.4 Maschinenversuche

Aus den angegebenen Rohstoffen wurde eine stabilisierte Zusammensetzung (ZS) wie unter 1.2 beschrieben hergestellt. Mittels eines Hochdruck-Puromaten® PU 30/80 IQ (Elastogran GmbH) mit einer Austragsmenge von 250 g/sek. wurde ZS mit der erforderlichen Menge des angegebenen Isocyanats vermischt, so dass ein Isocyanat-Index von 110 erreicht wurde. Die Reaktionsmischung wurde in temperierte Formwerkzeuge der Abmessungen 2000 mm x 200 mm x 50 mm bzw. 400 mm x 700 mm x 90 mm eingespritzt und dort aufschäumen gelassen. Die Überfüllung betrug 15%.

Die eingesetzten Ausgangsstoffe, die Herstellungseigenschaften sowie die mechanischen Eigenschaften der Schaumstoffe sind in der folgenden Tabelle beschrieben.

Die folgende Tabelle fasst die Rezeptierung der Maschinenversuche (Zahlenangaben in Gewichtsteilen) und deren Ergebnisse zusammen.

| ZS | 1 | 2 | 3 (V) | 4 (V) |
|---|---|---|---|---|
| Polyolmischung | 92,55 | 92,55 | 92,7 | 92,7 |
| Katalysatormischung | 2,1 | 2,1 | 2,05 | 2,05 |
| Stabilisator | 2,8 | 2,8 | 2,75 | 2,75 |
| Wasser | 2,55 | 2,55 | 2,5 | 2,5 |
| Tensid TD | 2 | 3,5 | 0 | 0 |
| Treibmittel 1 | 13,5 | 13,5 | 13,5 | 13,5 |
| Nukleierungsmittel | 1 | 1,5 | 1 | 0 |
| Summe der Gewichtsteile der Polyolkomponente | 116,5 | 118,5 | 114,5 | 113,5 |
| Aussehen ZS | klar bei RT | klar bei RT | trüb bei RT | klar bei RT |
| ZS verschäumt mit | | | | |
| **Lupranat® M20S** | 150 | 150 | 151 | 151 |
| | | | | |
| Startzeit [s] | 5 | 5 | 4 | 5 |
| Abbindezeit [s] | 44 | 44 | 38 | 42 |
| Freies Raumgewicht [g/l] | 22,4 | 22,4 | 22,2 | 22,9 |
| Wärmeleitfähigkeit [mW/m*K] | 17,9 | 17,8 | 17,9 | 18,6 |

**Patentansprüche**

1. Verfahren zur Herstellung von Polyurethan- oder Polyisocyanuratschaumstoffen umfassend die Umsetzung

    (a) einer Zusammensetzung (Z1), enthaltend

        (i) eine Zusammensetzung (ZP) mindestens enthaltend ein Polyol und einen Katalysator, der die Ausbildung einer Urethan-, Harnstoff- oder Isocyanurat-Bindung katalysiert, und
        (ii) ein Tensid TD, welches kein Siliziumatom und einen HLB-Wert kleiner 10 aufweist, enthält, wobei der Anteil der Summe der Tenside TD in der Zusammensetzung von 0,05 bis 10 Massenteile pro 100 Massenteile der Zusammensetzung (ZP) beträgt,

    (b) mit mindestens einem Polyisocyanat,

wobei die Umsetzung in Gegenwart eines Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und eines Treibmittels stattfindet, wobei das Nukleierungsmittel vom Treibmittel verschieden ist.

2. Verfahren gemäß Anspruch 1, wobei das Treibmittel der Zusammensetzung (Z1) vor der Umsetzung mit dem mindestens einen Polyisocyanat zugesetzt wird.

3. Verfahren gemäß Anspruch 1 oder 2, wobei das Nukleierungsmittel und das Treibmittel unter Erhalt einer Zusammensetzung (Z2) gemischt werden und die Zusammensetzung (Z2) der Zusammensetzung (Z1) vor der Umsetzung mit dem mindestens einen Polyisocyanat zugesetzt wird.

4. Verfahren gemäß einem der Ansprüche 1 bis 3, **dadurch gekennzeichnet, dass** das Tensid TD mindestens eine Verbindung der Formel (I) ist,

$$R\text{-}[C(O)]_x\text{-}Y \qquad (I)$$

mit C(O) einer Carbonylgruppe, x = 0 oder 1, R ein linearer, verzweigter oder cyclischer, gesättigter oder ungesättigter Kohlenwasserstoffrest, mit mindestens 4, vorzugsweise von 8 bis 30, bevorzugt von 9 bis 20 und besonders bevorzugt 9 bis 18 Kohlenstoffatomen, und Y = O-R$^1$ oder NR$^1$R$^2$ oder O-CH$_2$-CH(OR$^3$)-CH$_2$OH, jeweils mit R$^1$ und R$^2$ gleiche oder verschiedene Reste (C$_n$H$_{2n}$O)$_m$-H, wobei n = 2 bis 4, vorzugsweise n = 2 bis 3, besonders bevorzugt n = 2 ist, sowie m = 0 - 15, bevorzugt m = 0 - 10, besonders bevorzugt m = 0 oder 1- 6, und mit R$^3$ = H oder R' oder C(O)R', wobei R' ein Kohlenwasserstoffrest wie für R definiert ist und gleich oder verschieden zum Rest R sein kann.

5. Verfahren gemäß einem der Ansprüche 1 bis 4, **dadurch gekennzeichnet, dass** das Tensid TD Iso-Tridecanol oder Iso-Nonanol ist.

6. Verfahren gemäß einem der Ansprüche 1 bis 5, **dadurch gekennzeichnet, dass** das Nukleierungsmittel mindestens eine Verbindung ausgewählt aus der Gruppe bestehend aus perfluorierten Kohlenwasserstoffen und mindestens einen perfluorierten Kohlenwasserstoffrest aufweisenden Ethern ist.

7. Verfahren gemäß einem der Ansprüche 1 bis 6, **dadurch gekennzeichnet, dass** das Nukleierungsmittel in einer Menge im Bereich von 0,1 bis 10 Massenteilen bezogen auf 100 Massenteile der Zusammensetzung (ZP) eingesetzt wird.

8. Verfahren gemäß einem der Ansprüche 1 bis 7, **dadurch gekennzeichnet, dass** das Nukleierungsmittel ausgewählt ist aus der Gruppe bestehend aus Perfluorpentan C$_5$F$_{12}$, Perfluorhexan C$_6$F$_{14}$, Perfluorcyclohexan C$_6$F$_{12}$, Perfluorheptan C$_7$F$_{16}$, Perfluoroctan C$_8$F$_{18}$, und/oder ein oder mehrere per-fluorierte Olefine der Summenformeln C$_5$F$_{10}$, C$_6$F$_{12}$, C$_7$F$_{14}$, C$_8$F$_{16}$, Dimere des 1,1,2,3,3,3-Hexafluor-1-propen, Methoxyheptafluoropropan, Methoxynonafluorobutan und/oder Ethoxynonafluorobutan.

9. Verfahren gemäß einem der Ansprüche 1 bis 8, **dadurch gekennzeichnet, dass** das mindestens eine Polyol ausgewählt ist aus der Gruppe bestehend aus Polyetheralkoholen und Polyesteralkoholen.

10. Verfahren gemäß einem der Ansprüche 1 bis 9, **dadurch gekennzeichnet, dass** das mindestens eine Polyisocyanat ausgewählt ist aus der Gruppe bestehend aus aromatischen mehrwertigen Isocyanaten.

11. Kit zur Herstellung einer stabilisierten Zusammensetzung (ZS) für die Herstellung eines Polyurethan- oder Polyisocyanuratschaumstoffs, bestehend aus

    (I) einer Zusammensetzung (Z1), mindestens enthaltend
    eine Zusammensetzung (ZP) enthaltend mindestens ein Polyol und mindestens einen Katalysator, der die Ausbildung einer Urethan-, Harnstoff- oder Isocyanurat-Bindung katalysiert, und
    mindestens ein Tensid TD, welches kein Siliziumatom und einen HLB-Wert kleiner 10 aufweist, enthält, wobei der Anteil der Summe der Tenside TD in der Zusammensetzung von 0,05 bis 10 Massenteile pro 100 Massenteile der Zusammensetzung (ZP) beträgt, und
    (II) einer Zusammensetzung (Z2), mindestens enthaltend
    ein Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen, und
    ein Treibmittel, wobei das Nukleierungsmittel vom Treibmittel verschieden ist.

12. Stabilisierte Zusammensetzung (ZS), mindestens enthaltend

    (a) mindestens eine Zusammensetzung (ZP) mindestens enthaltend mindestens ein Polyol und mindestens einen Katalysator, der die Ausbildung einer Urethan-, Harnstoff- oder Isocyanurat-Bindung katalysiert,
    (b) mindestens ein Tensid TD, welches kein Siliziumatom und einen HLB-Wert kleiner 10 aufweist, enthält, wobei der Anteil der Summe der Tenside TD in der stabilisierten Zusammensetzung (ZS) von 0,05 bis 10 Massenteile pro 100 Massenteile der Zusammensetzung (ZP) beträgt,
    (c) mindestens ein Nukleierungsmittel, ausgewählt aus der Gruppe bestehend aus perfluorierten Kohlenwasserstoffen, mindestens einen perfluorierten Kohlenwasserstoffrest aufweisenden Ethern und mindestens einen perfluorierten Kohlenwasserstoffrest aufweisenden Ketonen,
    (d) mindestens ein Treibmittel, wobei das Treibmittel vom Nukleierungsmittel verschieden ist,

wobei die Zusammensetzung (ZS) eine phasenstabile Flüssigkeit ist, **dadurch gekennzeichnet, dass** die Zusammensetzung (ZS) mit bloßem Auge betrachtet bei einer Umgebungstemperatur von 20°C nicht aus mehreren Phasen besteht.

13. Polyurethan- oder Polyisocyanuratschaumstoff, erhältlich oder erhalten durch ein Verfahren gemäß einem der Ansprüche 1 bis 10 oder unter Verwendung einer stabilisierten Zusammensetzung (ZS) gemäß Anspruch 11 oder 12.

14. Verwendung eines Polyurethan- oder Polyisocyanuratschaumstoffs gemäß Anspruch 13 als oder zur Herstellung von Isoliermaterialien, vorzugsweise Dämmplatten, Sandwichelementen, Warmwasserspeichern, Boilern, Kühlapparaturen, Isolierschäumen, Kühlgeräten oder Gefriergeräten.

15. Dämmplatte, Sandwichelement, Warmwasserspeicher, Boiler, Kühlapparatur, Isolierschaum, Kühlgerät oder Gefriergerät, das als Isoliermaterial einen Polyurethanschaum gemäß Anspruch 13 aufweist.

Europäisches
Patentamt

European
Patent Office

Office européen
des brevets

**EUROPÄISCHER RECHERCHENBERICHT**

Nummer der Anmeldung

EP 13 19 8303

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/010224 A1 (WILSON JOE C [US] ET AL) 24. Januar 2002 (2002-01-24) <br> * Absatz [0016] - Absatz [0019] * <br> * Absatz [0042] - Absatz [0046] * <br> * Absatz [0056] - Absatz [0062] * <br> * Absatz [0077] - Absatz [0079] * <br> * Absätze [0080], [0088] * <br> ----- | 1-4,6-15 | INV. <br> C08J9/00 <br> C08J9/14 |
| X,D | WO 98/42764 A1 (ICI PLC [GB]) 1. Oktober 1998 (1998-10-01) <br> * Seite 2, Zeile 23 - Seite 7, Zeile 29 * <br> ----- | 1-4,6-15 | |
| X,D | DE 692 13 166 T2 (ICI PLC [GB]) 6. Februar 1997 (1997-02-06) <br> * Seite 3, Zeile 17 - Seite 4, Zeile 16 * <br> * Seite 7, Zeile 25 - Seite 10, Zeile 20 * <br> * Seite 12, Zeile 11 - Zeile 31 * <br> * Seite 10, Zeile 31 - Seite 11, Zle 23 * <br> * Seite 16, Zeile 6 - Zeile 19 * <br> * Beispiel 1 * <br> ----- | 1-4,6-15 | |
| | | | RECHERCHIERTE SACHGEBIETE (IPC) <br><br> C08J <br> C08L <br> C08G |

Der vorliegende Recherchenbericht wurde für alle Patentansprüche erstellt

| Recherchenort | Abschlußdatum der Recherche | Prüfer |
|---|---|---|
| Den Haag | 24. April 2014 | Lichau, Holger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 13 19 8303

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2014

| Im Recherchenbericht angeführtes Patentdokument | Datum der Veröffentlichung | Mitglied(er) der Patentfamilie | Datum der Veröffentlichung |
|---|---|---|---|
| US 2002010224 A1 | 24-01-2002 | CA 2260309 A1<br>US 2002010224 A1 | 09-08-1999<br>24-01-2002 |
| WO 9842764 A1 | 01-10-1998 | AR 012559 A1<br>AU 727456 B2<br>BR 9808273 A<br>CA 2280807 A1<br>CN 1251115 A<br>DE 69804952 D1<br>DE 69804952 T2<br>EP 0968240 A1<br>ES 2175697 T3<br>HU 0000880 A2<br>ID 22774 A<br>JP 2001519847 A<br>NZ 337226 A<br>PL 335741 A1<br>SK 127799 A3<br>TR 9902164 T2<br>TW 420695 B<br>US 6034145 A<br>WO 9842764 A1 | 08-11-2000<br>14-12-2000<br>16-05-2000<br>01-10-1998<br>19-04-2000<br>23-05-2002<br>17-10-2002<br>05-01-2000<br>16-11-2002<br>28-07-2000<br>09-12-1999<br>23-10-2001<br>31-08-2001<br>08-05-2000<br>10-04-2000<br>21-12-1999<br>01-02-2001<br>07-03-2000<br>01-10-1998 |
| DE 69213166 T2 | 06-02-1997 | AU 654406 B2<br>AU 2822992 A<br>CA 2082964 A1<br>CN 1073455 A<br>CN 1131682 A<br>DE 69213166 D1<br>DE 69213166 T2<br>EP 0543536 A1<br>ES 2091414 T3<br>HK 1001694 A1<br>JP H05271371 A | 03-11-1994<br>27-05-1993<br>21-05-1993<br>23-06-1993<br>25-09-1996<br>02-10-1996<br>06-02-1997<br>26-05-1993<br>01-11-1996<br>03-07-1998<br>19-10-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1683831 A
- EP 1209189 A
- WO 2005019328 A
- DE 69212342 T2
- US 5346928 A
- DE 69413231 T2
- EP 0662494 A1
- DE 69600838 T2
- DE 69213166 T2
- DE 4121161 A1
- DE 3930824 A1
- US 6420443 B1
- WO 2007094780 A
- US 6472446 B
- WO 9842764 A
- WO 9612759 A
- EP 0767199 A1
- EP 1520873 A2
- WO 2013026813 A
- DE 1802500
- DE 1802503
- DE 1745443
- DE 1745459
- US 3578612 A
- US 20070072951 A1
- WO 2007111828 A2
- US 20070238800 A
- US 6359022 B1
- WO 9612759 A2
- WO 2006094227 A
- WO 2004096882 A
- US 20020103091 A
- WO 2006116456 A
- EP 1678232 A

- WO 2011134866 A2
- WO 2011134856 A1
- EP 1138709 A1
- WO 2006037540 A2
- WO 2011107374 A1
- EP 1985642 A
- EP 1985644 A
- EP 1977825 A
- US 20080234402 A
- EP 0656382 B1
- US 20070282026 A1
- EP 1873209 A
- EP 1544235 A
- DE 102004001408
- EP 0839852 A
- WO 2005118668 A
- US 20070072951 A
- DE 2533074
- EP 1537159 A
- EP 533202 A
- US 3933695 A
- EP 0780414 A
- DE 4239054
- DE 4229402
- EP 867464 A
- US 4147847 A
- EP 0493836 A
- US 4855379 A
- EP 1712578 A1
- EP 1161474 A
- WO 058383 A1
- EP 1678232 A2
- WO 2005085310 A

**In der Beschreibung aufgeführte Nicht-Patentliteratur**

- **W. C. GRIFFIN.** *J. Cos. Cosmet. Chem.,* 1950, vol. 311 (5), 249
- **J. C. MCGOWAN.** *Tenside Surfactants Detergents,* 1990, vol. 27, 229

- Ullmann's Encyclopedia of Industrial Chemistry. VCH, 1992, vol. A21, 665-715